(19) Europäisches Patentamt
European Patent Office
Office européen des brevets

(11) **EP 0 982 485 B1**

(12) **EUROPEAN PATENT SPECIFICATION**

(45) Date of publication and mention
of the grant of the patent:
**08.03.2006 Bulletin 2006/10**

(51) Int Cl.:
*F02D 21/08* (2006.01)   *F02D 41/14* (2006.01)

(21) Application number: **99116224.9**

(22) Date of filing: **17.08.1999**

(54) **Internal combustion engine**

Brennkraftmaschine

Moteur à combustion interne

(84) Designated Contracting States:
**DE FR GB**

(30) Priority: **21.08.1998 JP 23592798
27.08.1998 JP 24196998
01.09.1998 JP 24722098
13.11.1998 JP 32396498**

(43) Date of publication of application:
**01.03.2000 Bulletin 2000/09**

(73) Proprietor: **Toyota Jidosha Kabushiki Kaisha
Toyota-shi, Aichi-ken 471-8571 (JP)**

(72) Inventors:
• **Gotoh, Masato,**
**c/o Toyota Jidosha Kabushiki Kaisha**
**Toyota-shi,**
**Aichi-ken, 471-8571 (JP)**
• **Sasaki,Shizuo,**
**c/o Toyota Jidosha Kabushiki Kaisha**
**Toyota-shi,**
**Aichi-ken, 471-8571 (JP)**
• **Yoshizaki,Kouji,**
**c/o Toyota Jidosha Kabushiki K.**
**Toyota-shi,**
**Aichi-ken, 471-8571 (JP)**
• **Ito, Takekazu,**
**c/o Toyota Jidosha Kabushiki K.**
**Toyota-shi,**
**Aichi-ken, 471-8571 (JP)**
• **Murata, Hiroki,**
**c/o Toyota Jidosha Kabushiki K.**
**Toyota-shi,**
**Aichi-ken, 471-8571 (JP)**

(74) Representative: **TBK-Patent
Bavariaring 4-6
80336 München (DE)**

(56) References cited:
**DE-C- 19 612 179**

• **YANAGIHARA H ET AL: "A STUDY OF DI DIESEL
COMBUSTION UNDER UNIFORM
HIGHER-DISPERSED MIXTURE FORMATION"
JSAE REVIEW, SOCIETY OF AUTOMOTIVE
ENGINEERS OF JAPAN, TOKYO, JP, vol. 18, no.
3, July 1997 (1997-07), pages 247-254,
XP000979665 ISSN: 0389-4304**
• **PATENT ABSTRACTS OF JAPAN vol. 1996, no.
09, 30 September 1996 (1996-09-30) & JP 08
114136 A (NISSAN MOTOR CO LTD), 7 May 1996
(1996-05-07)**

**Description**

BACKGROUND OF THE INVENTION

1. FIELD OF THE INVENTION

The present invention relates to an internal combustion engine according to the preamble of claim 1, wherein an inert gas is introduced into a combustion chamber for combustion.

2 DESCRIPTION OF THE RELATED ART

Conventionally, in an internal combustion engine, for example, in a diesel engine, in order to restrict generation of NOx, it is structured to connect an engine exhaust passage and an engine intake passage by an exhaust gas recirculation (hereinafter, refer to as EGR) so as to recirculate an exhaust gas, that is, an EGR gas into the engine intake passage via the EGR passage. In this case, since the EGR gas has a relatively high specific heat and accordingly can absorb a large amount of heat, a combustion temperature within the combustion chamber is lowered as an amount of the EGR gas is increased, that is, a rate of the EGR (EGR gas amount/(EGR gas amount + intake air amount)) is increased. When the combustion temperature is lowered, a generation amount of NOx is lowered. Accordingly, the more the EGR rate is increased, the less the generation amount of NOx becomes.

As mentioned above, it has been conventionally known that the generation amount of NOx can be lowered when the EGR rate is increased. However, in the case where the EGR rate is increased, a generation amount of a soot, that is, a smoke suddenly starts increasing when the EGR rate exceeds a certain limit. With respect to this point, it has been conventionally considered that the smoke is unlimitedly increased when the EGR rate is increased further, so that it has been considered that the EGR rate at which the smoke suddenly starts increasing is the maximum allowable limit of the EGR rate.

Accordingly, the EGR rate has been conventionally defined within a range which does not exceed the maximum allowable limit. The maximum allowable limit of the EGR rate is significantly different depending on a type of the engine and a fuel, however, it is within a range between about 30 % and 50 %. Therefore, in the conventional diesel engine, the EGR rate is restricted to the range between about 30 % and 50 % at the maximum.

As mentioned above, since it has been conventionally considered that the maximum allowable limit exists with respect to the EGR rate, the EGR rate has been defined within the range which does not exceed the maximum allowable limit and so that the generation amount of the smoke becomes as least as possible. However, even when the EGR rate is defined to reduce the generation amount of NOx and the smoke as least as possible, a reduction of the generation amount of NOx and the smoke has a limit. Therefore a significant amount of NOx and smoke is still generated.

However, in the process of researching the combustion in the diesel engine, it has been found that when increasing the EGR rate to be greater than the maximum allowable limit, the smoke is suddenly increased as mentioned above, however, the generation amount of the smoke has a peak, and when further increasing the EGR rate to exceed the peak, then the smoke suddenly starts reducing at this time. When setting the EGR rate to a value equal to or more than 70 % during idling operation, or strongly cooling the EGR gas, the smoke becomes substantially 0, that is, the soot is hardly generated when setting the EGR rate to a value equal to or more than 55 %. Further, it has been found that the generation amount of NOx becomes a significantly small amount at this time. Thereafter, on the basis of this information, the consideration has been performed with respect to the reason why the soot is not generated. As a result, a new combustion system which has not been obtained and can simultaneously reduce the soot and NOx has been constructed. The new combustion system will be in detail described below. In short, it is on the basis of the idea that the growth of a hydrocarbon is stopped it grows up to become the soot.

That is, it has been ascertained as a result of many experiments and studies that if the temperature of fuel and ambient gas in the combustion chamber during combustion is equal to or lower than a certain temperature, the growth of hydrocarbon is stopped before it becomes soot, and that if the temperature of fuel and ambient gas becomes higher than the aforementioned certain temperature, the hydrocarbon rapidly grows up to become soot. In this case, the temperature of the fuel and the ambient gas is greatly influenced by an endothermic effect of the gas surrounding the fuel at a time when the fuel is burned, so that it is possible to control the temperature of the fuel and the ambient gas by adjusting the heat absorption amount of the gas surrounding the fuel in correspondence to the generation amount at a time of the combustion of the fuel.

Accordingly, when restricting the temperature of the fuel and the ambient gas during combustion within the combustion chamber to a level equal to or less than the temperature at which the growth of the hydrocarbon stops on the way, the soot is not generated. It is, thus, possible to restrict the temperature of the fuel and the ambient gas during combustion within the combustion chamber to a level equal to or less than the temperature at which the growth of the hydrocarbon stops by adjusting the heat absorption amount of the gas surrounding the fuel. On the contrary, the hydrocarbon that stops growing before it becomes the soot can be easily purified by an after treatment using an oxidation catalyst or the like. This is a basic principle of the new combustion system. The internal combustion engine employing the new combustion system has been already filed under the application number of EP-A 879,946 by the present applicant. Further; it is referred to Yanagihara H. et al.: "A study of DI diesel combustion under uniform higher-dispersed mixture formation", JSAE Review 18 (1997), pages 247-254.

Here, in the new combustion system, the fuel injection timing at which the stable combustion can be obtained is limited to a relatively narrow range of a crank angle. That is, when the fuel injection timing is quickened, the injected fuel is heated by the compressed high temperature gas for a long time, so that the temperature of the fuel and the ambient gas becomes high during combustion. As a result, since a hydrogen carbide grows up to a soot, the smoke is generated. On the contrary, when the fuel injection timing is delayed, the temperature of the injected fuel is not increased so much, so that most of the fuel is not burned, resulting in misfire. That is, in this new combustion system, there exists an optimum range of a crank angle at which a stable combustion can be obtained in a state where no smoke nor misfire is generated with respect to the fuel injection timing, so that it is necessary to perform fuel injection at the optimum range of the crank angle in the case of performing the new combustion.

However, the optimum range of the crank angle at which the stable combustion can be obtained is likely to vary with an environmental condition, for example, the climate. Therefore, even when the fuel injection timing is controlled within the optimum range of the crank angle previously determined in accordance with the operation state of the engine, the smoke or misfire is caused by the change in the environmental condition.

Besides, it is referred to DE 196 12 179 C1, which discloses a method of controlling the combustion in a conventional internal combustion engine. For this purpose, the combustion noise of individual cylinders is measured using an impact sound sensor, and the measured value of each cylinder is compared with a threshold value. If the threshold value is exceeded, it is judged that combustion has started in the respective cylinder. By advancing or delaying the injection timing, a different torque output of the individual cylinders is equalized which results from machining tolerances in the manufacture of the internal combustion engine.

SUMMARY OF THE INVENTION

An object of the present invention is to perform a new type of combustion generating no smoke nor misfire.

The above object is accomplished by combination of features of the independent claim. The dependent claims disclose further advantageous embodiments of the invention.

The above object is achieved by providing, in accordance with the present invention, an internal combustion engine structured such that a generation amount of a soot is gradually increased to a peak when increasing an amount of an inert gas supplied within a combustion chamber, wherein there are provided inert gas amount control means for restricting a temperature of a fuel and an ambient gas at a time of combustion within the combustion chamber to a temperature lower than a temperature when soot is generated by making an amount of the inert gas supplied within the combustion chamber more than an amount of the inert gas when the generation amount of the soot becomes peak, detecting means for detecting a torque change amount of an engine output, and control means for controlling a fuel injection timing so that the torque change amount becomes within a predetermined range.

Furthermore, according to the invention, at the above internal combustion engine, the injection control means may control the fuel injection timing in consideration of the detected torque change amount.

Further, at the above internal combustion engine, in accordance with the invention the injection timing control means may control the fuel injection timing in dependence of the detected torque change amount such that the injection timing is quickened or delayed when the detected torque change amount is not within the predetermined range.

Still further, at the above internal combustion engine, in accordance with the invention the injection timing control means may quicken the fuel injection timing when the torque change amount becomes greater than the predetermined range and may delay the fuel injection timing when the torque change amount becomes smaller than the predetermined range.

Furthermore, at the above internal combustion engine, in accordance with the invention the detecting means may detect an average torque change amount of all cylinders, and the injection timing control means controls the fuel injection timing of each of the cylinders so that the average torque change amount becomes within the predetermined range. Alternatively, the detecting means may detect the torque change amount at every cylinder, and the injection timing control means may control the fuel injection timing at every cylinder so that the torque change amount of each of the cylinders becomes within the predetermined range.

Accordingly, as the combustion is deteriorated, a torque change of the engine output is increased, so that it is possible to judge on the basis of the torque change amount of the engine output whether or not the combustion is deteriorated. Further, when quickening the fuel injection timing, the torque change amount of the engine output is gradually decreased, however, when the fuel injection timing is quickened too much, the smoke is generated. Accordingly, when controlling the torque change amount of the engine output to a certain range, an improved combustion generating no misfire nor smoke can be obtained.

This summary of the invention does not necessarily describe all necessary features so that the invention may also reside in a sub-combination of these described features.

BRIEF DESCRIPTION OF THE DRAWINGS

Fig. 1 is a general view of a compression ignition type internal combustion engine of the present invention;

Fig. 2 is a graph showing the change in throttle opening deggree, the EGR rate, the output torque and each amount of smoke, HC, CO and NOx in accordance with the air fuel ratio;

Fig. 3A and Fig. 3B represent graphical illustration showing the combustion pressure as a function of the air fuel ratio;

Fig. 4 shows the molecular structure of the fuel;

Fig. 5 is a graph showing the relation between the generation amount of smoke and the EGR rate;

Fig. 6 is a graph showing a relation between total amount of intake gas and the required load;

Fig. 7 is a graph showing a first operation area I and a second operation area II;

Fig. 8 is a graph showing the output of an air fuel ratio sensor;

Fig. 9 is a graph showing an opening degree of a throttle valve, an opening degree of an EGR control valve, an EGR rate, an air fuel ratio, an injection timing and an injection amount at the required load;

Fig. 10 is a graph showing an air fuel ratio in a first operation area I;

Fig. 11A and Fig. 11B shows a map of a target opening degree of the throttle valve and the like;

Fig. 12A and Fig. 12B show a map of an injection amount Q and an injection start timing θS;

Fig. 13 is a graph showing an air fuel ratio in a second combustion mode;

Fig. 14A and Fig. 14B show a map of a target opening degree of the throttle valve and the like;

Fig. 15A and Fig. 15B show a map of the injection amount Q and the injection start timing θS;

Fig. 16 is a view showing the change of the crank angle in an elapsed time;

Fig. 17 is a flow chart for calculating the variant of the torque in the first embodiment;

Fig. 18 is a flow chart for controlling the engine operation in the first embodiment;

Fig. 19 is a flow chart for calculating the variant of the torque in the second embodiment;

Fig. 20 is a flow chart for controlling the engine operation in the second embodiment;

Fig. 21A and Fig. 21B show a relation among a depression amount of an acceleration pedal, an engine speed and an injection amount for reducing the change in an output torque when switching the combustion state;

Fig. 22A and Fig. 22B show a map of an injection amount for reducing the change in the output torque when switching the combustion state;

Fig. 23A and Fig. 23B show the change in the injection amount for reducing the change in the output torque when switching the combustion state;

Fig. 24 shows a map of the injection amount;

Fig. 25 shows the first operation area I and the second operation area II for switching the combustion on the basis of the required torque;

Fig. 26A and Fig. 26B show a graphical representation of the required torque;

Fig. 27 shows an air fuel ratio in the first operation area I for switching the combustion on the basis of the required torque;

Fig. 28A and Fig. 28B show a map of the injection amount and the injection start timing for switching the combustion on the basis of the required torque;

Fig. 29A and Fig. 29B and Fig. 29C show a map of the target opening degrees of both the throttle valve and the EGR control valve, and the target fuel pressure for switching the combustion on the basis of the required torque;

Fig. 30 is a view showing an air fuel ratio in the second operation area II for switching the combustion on the basis of the required torque;

Fig. 31A and Fig. 31B show a map of the injection amount and the injection start timing for switching the combustion on the basis of the required torque;

Fig. 32A and Fig. 32B and Fig. 32C show a map of the target opening degree both of the throttle valve and the EGR control valve and the target fuel pressure for switching the combustion on the basis of the required torque;

Fig. 33 is a flow chart for controlling the engine operation in order to switch the combustion on the basis of the required torque; and

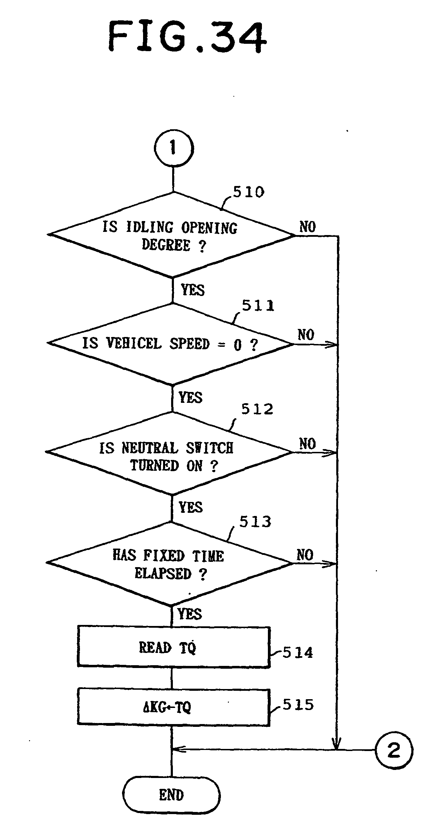

Fig. 34 is a flow chart for controlling the engine operation in order to switch the combustion on the basis of the required torque.

DESCRIPTION OF THE PREFERRED EMBODIMENT

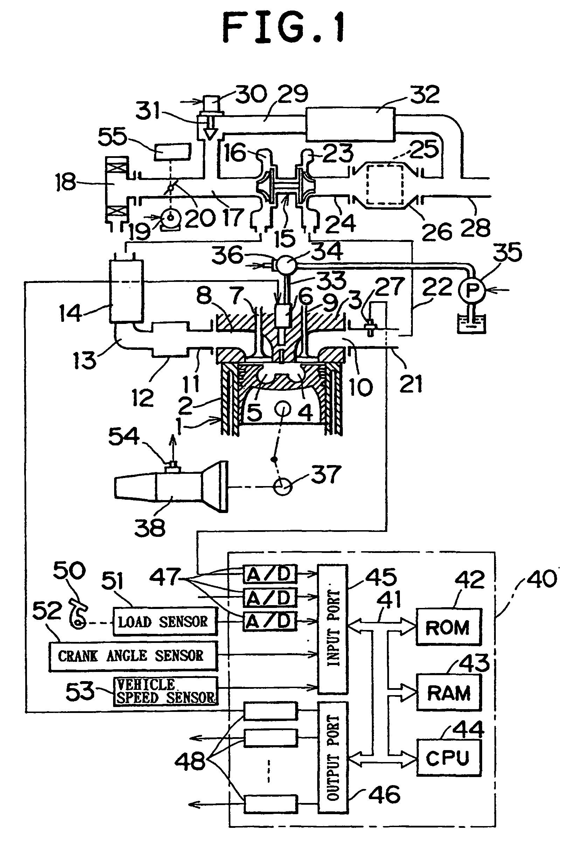

Fig. 1 shows a case in which the present invention is applied to a 4-stroke compression ignition type internal combustion engine.

Referring to Fig. 1, a reference numeral 1 denotes an engine body, a reference numeral 2 denotes a cylinder block, reference numeral 3 denotes a cylinder head, reference numeral 4 denotes a piston, reference numeral 5 denotes a combustion chamber, reference numeral 6 denotes a electrically controlled fuel injection valve, reference numeral 7 denotes an intake valve, reference numeral 8 denotes an intake port, reference numeral 9 denotes an exhaust valve, and reference numeral 10 denotes an exhaust port, respectively. The intake port 8 is connected to a surge tank 12 via a corresponding intake branch pipe 11, and the surge tank 12 is connected to a supercharger, for example, an outlet portion of a compressor 16 of an exhaust turbo charger 15 via an intake duct 13 and an inter cooler 14. An inlet portion of the compressor 16 communicates with an air cleaner 18 via an air intake pipe 17, and a throttle valve 20 driven by a step motor 19 is arranged within the air intake pipe 17.

On the other side, the exhaust port 10 communicates with an inlet portion of an exhaust turbine 23 of the exhaust turbo charger 15 via an exhaust manifold 21 and an exhaust pipe 22, and an outlet portion of the exhaust turbine 23 communicates with a catalyst converter 26 containing a catalyst 25 having an oxidation function therewithin via an exhaust pipe 24. An air fuel ratio sensor 27 is arranged within the exhaust manifold 21.

An exhaust pipe 28 connected to an outlet portion of the catalytic converter 26 and the air intake pipe 17 disposed downstream the throttle valve 20 are connected to each other via an EGR passage 29, and an EGR control valve 31 driven by a step motor 30 is arranged within the EGR passage 29. Further, an inter cooler 32 for cooling an EGR gas flowing within the EGR passage 29 is arranged within the EGR passage 29. In the embodiment shown in Fig. 1, an engine cooling water is introduced into the inter cooler 32, and the EGR gas is cooled by the engine cooling water.

Further, the fuel injection valve 6 is connected to a fuel reservoir, so-called a common rail 34 via a fuel feed pipe 33. A fuel is supplied into the common rail 34 from an electrically controlled fuel pump 35, whose discharge amount is variable. The fuel supplied to the common rail 34 is supplied to the fuel injection valve 6 via each fuel feed pipe 33. A fuel pressure sensor 36 for detecting a fuel pressure within the common rail 34 is mounted to the common rail 34, so that a discharge amount of the fuel pump 35 can be controlled so that the fuel pressure within the common rail 34 becomes a target fuel pressure on the basis of an output signal of the fuel pressure sensor 36.

Further, as shown in Fig. 1, a crank shaft 37 is connected to an automatic transmission 38.

An electronic control unit 40 is composed of a digital computer, and is provided with a read only memory (ROM) 42, a random access memory (RAM) 43, a microprocessor (CPU) 44, an input port 45 and an output port 46, which are interconnected with one another by a bi-directional bus 41. The output signal from the air fuel ratio sensor 27 is input to the input port 45 via a corresponding AD converter 47, and the output signal from the fuel pressure sensor 36 is also input to the input port 45 via the corresponding AD converter 47. A load sensor 51 for generating an output voltage in proportion to a depression amount L of an accelerator pedal 50 is connected to the accelerator pedal 50, and an output voltage of the load sensor 51 is input to the input port 45 via the corresponding AD converter 47. Further, a crank angle sensor 52 for generating an output pulse every time when the cranks shaft rotates, for example, at 30 degrees is connected to the input port 45. Further, an output pulse indicating a vehicle speed from the vehicle speed sensor 53 is input to the input port 45, and an output signal of a neutral sensor 54 for detecting whether or not the automatic transmission 38 is at a neutral position is input to the input port 45. Still further, an output signal of an idle switch 55 for detecting whether or not the throttle valve 20 is at an idling opening degree is input to the input port 45. On the contrary, the output port 46 is connected to the fuel injection valve 6, the step motor 19 for controlling the throttle valve, the step motor 30 for controlling the EGR control valve and the fuel pump 35 through the driving circuit corresponding the output port 46.

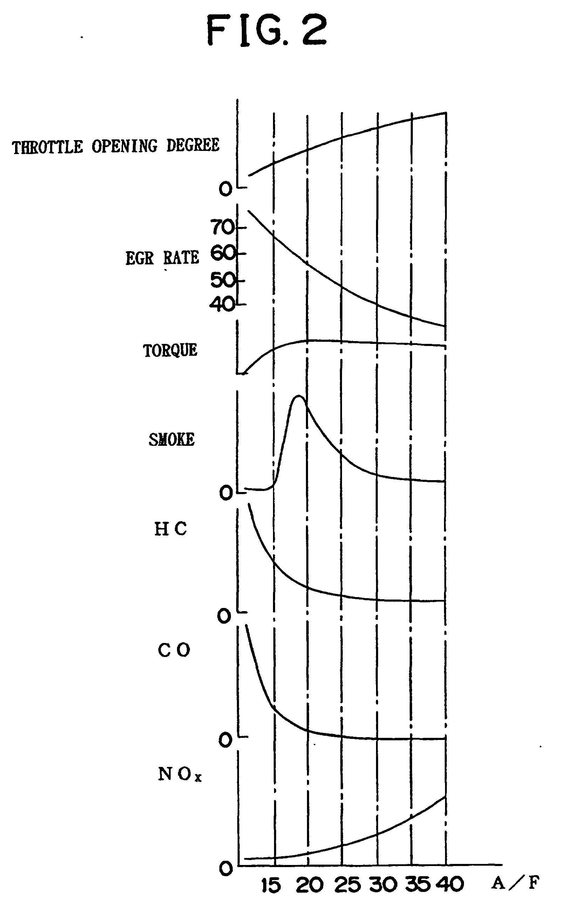

Fig. 2 shows an experimental example representing the change in an output torque and the change in the discharge amount of a smoke, HC, CO and NOx when changing an air fuel ratio A/F (the axis of abscissa in Fig. 2) by adjusting an opening degree of the throttle valve 20 and the EGR rate during the engine operation at a low load. As is understood from Fig. 2, in this experimental example, the smaller the air fuel ratio A/F becomes, the greater the EGR rate is, and the EGR rate becomes equal to or more than 65 % when the air fuel ratio is equal to or less than a stoichiometric air fuel ratio 14.6.

As shown in Fig. 2, in the case of reducing the air fuel ratio A/F to be smaller by increasing the EGR rate, the generation amount of the smoke starts increasing when the EGR rate reaches near 40 % and the air fuel ratio A/F reaches about 30 . Next, when further increasing the EGR rate and reducing the air fuel ratio A/F to be smaller, the generation amount of the smoke is suddenly increased to reach a peak. Next, when further increasing the EGR rate and reducing the air fuel ratio A/F to be smaller, the generation amount of the smoke drops abruptly, and when the air fuel ratio A/F approaches 15.0 with setting the EGR rate to a value equal to or more than 65 %, the generation amount of the smoke becomes almost 0. That is, the soot is hardly generated. At this time, the output torque of the engine is slightly reduced and the generation amount of NOx is significantly reduced. On the contrary, each generation amount of HC and CO starts increasing at this time.

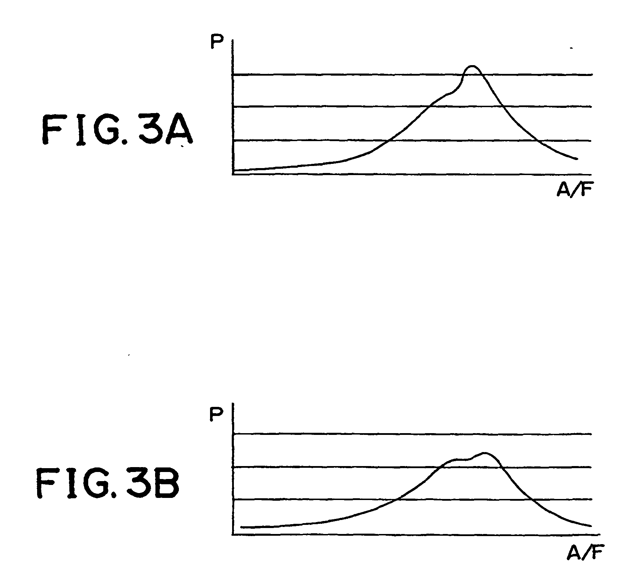

Fig. 3A shows a change of a combustion pressure within the combustion chamber 5 when the air fuel ratio A/F is near 21 and the generation amount of the smoke is the largest, and Fig. 3B shows a change of a combustion pressure within the combustion chamber 5 when the air fuel ratio A/F is near 18 and the generation amount of the smoke is substantially 0. As is understood from comparison between Figs. 3A and 3B, the combustion pressure in the case shown in Fig. 3B wherein the generation amount of the smoke is substantially 0 is lower than that shown in Fig. 3A wherein the generation amount of the smoke is large.

The following results can be introduced from the experimental results shown in Figs. 2 and 3. That is, at first, when the air fuel ratio A/F is equal to or less than 15.0 and the generation amount of the smoke is substantially 0, the generation amount of NOx is significantly reduced as shown in Fig. 2. A reduction of the generation amount of NOx means a reduction of the combustion temperature within the combustion chamber 5, so that it is said that the combustion temperature within the combustion chamber 5 becomes low when the soot is hardly generated . The same matter can be said from Fig. 3. That is, in a state shown in Fig. 3B where the soot is hardly generated, the combustion pressure becomes low, so that the combustion temperature within the combustion chamber 5 becomes low.

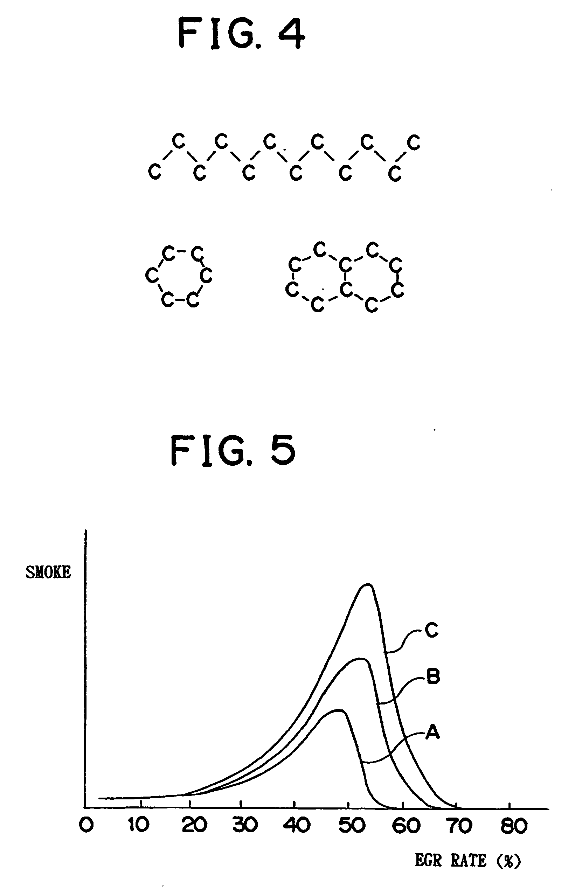

Secondly, when the generation amount of the smoke, that is, the generation amount of the soot becomes substantially 0, the discharge amount of HC and CO is increased as shown in Fig. 2. This means that the hydrocarbon is discharged without growing up to the soot. That is, in a straight chain hydrocarbon or an aromatic hydrocarbon shown in Fig. 4 and contained in the fuel, when the temperature is increased in a state of oxygen deficiency, a precursor of the soot is formed due to thermal decomposition, and the soot composed of a solid mainly formed by an aggregation of carbon atoms is produced. In this case, a process of actually producing the soot is complex and it is indefinite what state the precursor of the soot assumes, however, in any event, the hydrocarbon shown in Fig. 4 grows up to the soot through the precursor of the soot. Accordingly, as mentioned above, when the generation amount of the soot becomes substantially 0, the discharge amount of HC and CO is increased as shown in Fig. 2, however, HC at this time corresponds to the precursor of the soot or the hydrocarbon in the preceding state.

Putting in order the considerations on the basis of the experimental results shown in Figs. 2 and 3, when the combustion temperature within the combustion chamber 5 is low, the generation amount of the soot becomes substantially 0, so that the precursor of the soot or the hydrocarbon in the preceding state is discharged from the combustion chamber 5. As a result of further performing the experiments and researches with respect to the matter in detail, it becomes clear that the growing process of the soot stops on the way, that is, no soot is generated, in the case where the temperature of the fuel and the ambient gas within the combustion chamber 5 is equal to or less than a certain temperature, and that the soot is generated when the temperature of the fuel and the ambient gas within the combustion chamber 5 is equal to or more than a certain temperature.

In this case, since the temperature of the fuel and the ambient gas when the growing process of the hydrocarbon stops in a state of the precursor of the soot, that is, the certain temperature mentioned above is changed due to various reasons such as a kind of the fuel, a compression ratio of the air fuel ratio and the like, it is not said what degree the temperature is. However, the certain temperature has a great relation to the generation amount of NOx, so that the certain temperature can be defined from the generation amount of NOx at a certain level. That is, as the EGR rate is increased, the temperature of the fuel and the ambient gas at a time of combustion is reduced, so that the generation amount of NOx is reduced. At this time, the soot is hardly generated when the generation amount of NOx becomes near 10 p.p.m. or less. Accordingly, the certain temperature mentioned above substantially coincides with the temperature when the generation amount of NOx becomes near 10 p.p.m. (g/t) or less.

Once the soot is generated, the soot can not be purified by the after treatment using the catalyst having an oxidation function. On the contrary, the precursor of the soot or the hydrocarbon in the preceding state can be easily purified by the after treatment using the catalyst having an oxidation function. As mentioned above, considering the after treatment by the catalyst having an oxidation function, there is a significantly great difference between discharging the hydrocarbon from the combustion chamber 5 as the precursor of the soot or the preceding state, and discharging the hydrocarbon from the combustion chamber 5 as the soot. The new combustion system employed in the present invention is mainly structured to discharge the hydrocarbon from the combustion chamber 5 as the precursor of the soot or the preceding state without generating the soot within the combustion chamber 5 and oxidize the hydrocarbon by the catalyst having the oxidation function.

Further, in order to stop the growth of the hydrocarbon in the state prior to the generation of the soot, it is necessary to restrict the temperature of the fuel and the ambient gas at a time of the combustion within the combustion chamber 5 to the temperature lower than the temperature at which the soot is generated. In this case, it is clearly understood that the endothermic effect of the gas around the fuel when the fuel is burned affects restriction of the temperature of the fuel and the ambient gas at a significantly great amount.

That is, when only an air exists around the fuel, the evaporated fuel immediately reacts with an oxygen in the air so as to be burned. In this case, the temperature of the air apart from the fuel is not increased so much, only the temperature around the fuel becomes locally increased in a significant manner. That is, at this time, the air apart from the fuel hardly perform the endothermic effect of the combustion heat in the fuel. In this case, since the combustion temperature becomes locally high in a significant manner, an unburned hydrocarbon to which the combustion heat is applied generates the soot.

On the contrary, in the case where the fuel exists in the mixture gas composed of a large amount of inert gas and a small amount of air, the condition is slightly different. In this case, the evaporated fuel diffuses to the periphery and reacts with an oxygen contained in the inert gas in a mixed manner so as to burn. In this case, since the combustion heat is absorbed into the peripheral inert gas, the combustion temperature is not increased so much. That is, it is possible to restrict the combustion temperature to a low level. That is, in order to restrict the combustion temperature, an existence of the inert gas performs an important part, so that it is possible to restrict the combustion temperature to a low level due to the endothermic effect of the inert gas.

In this case, in order to restrict the temperature of the fuel and the ambient gas to a temperature lower than the temperature at which the soot is generated, the inert gas amount sufficient for absorbing an enough combustion heat is necessary. Accordingly, when the fuel amount increases, the necessary inert gas amount increases in accordance therewith. Here, in this case, the greater the specific heat of the inert gas is, the stronger the endothermic effect is, so that a gas having a great specific heat is preferable for the inert gas. In view of this point, since $CO_2$ and the EGR gas have a relatively great specific heat, it is said that it is preferable to employ the EGR gas as the inert gas.

Fig. 5 shows a relation between the EGR rate and the smoke when using the EGR gas as the inert gas and changing the cooling degree of the EGR gas. That is, in Fig. 5, a curve A shows a case of strongly cooling the EGR gas so as to maintain the EGR gas temperature to substantially 90 °C, a curve B shows a case of cooling the EGR gas by a compact cooling apparatus and a curve C shows a case of not forcibly cooling the EGR gas.

As shown by the curve A in Fig. 5, in the case of strongly cooling the EGR gas, the generation amount of the soot becomes peak when the EGR rate is a little lower than 50 %, and in this case, the soot is hardly generated when setting the EGR rate to a level equal to or more than substantially 55 %. On the contrary, as shown by the curve B in Fig. 5, in the case of a little cooling the EGR gas, the generation amount of the soot becomes peak when the EGR rate is a little higher than 50 %, and in this case, the soot is hardly generated when setting the EGR rate to a level equal to or more than substantially 65 %.

Further, as shown by the curve C in Fig. 5, in the case of not forcibly cooling the EGR gas, the generation amount of the soot becomes peak when the EGR rate is near 55 %, and in this case, the soot is hardly generated when setting the EGR rate to a level equal to or more than substantially 70 %.

In this case, Fig. 5 shows a generation amount of the smoke when the engine load is comparatively high, when the engine load becomes small, the EGR rate at which the generation amount of the soot becomes peak is slightly reduced, and a lower limit of the EGR rate at which the soot is hardly generated is slightly reduced. As mentioned above, the lower limit of the EGR rate at which the soot is hardly generated changes in correspondence to a cooling degree of the EGR gas and the engine load.

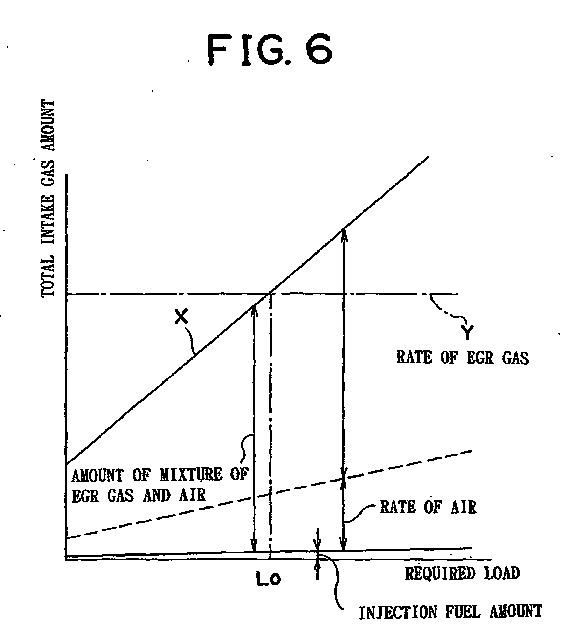

Fig. 6 shows a mixture gas amount of the EGR gas and an air necessary for making the temperature of the fuel and the ambient gas at a time of combustion in the case of employing the EGR gas for the inert gas lower than the temperature at which the soot is generated, a rate of the air in the mixture gas, and a rate of the EGR gas in the mixture gas. Here, in Fig. 6, the axis of ordinate shows a total inlet gas amount sucked within the combustion chamber 5, and a chain line Y shows a total inlet gas amount capable of being admitted within the combustion chamber 5 when a supercharging is not performed. Further, the axis of abscissa shows a required load.

With reference to Fig. 6, the rate of the air, that is, the air amount in the mixture gas shows an amount of the air necessary for completely burning the injected fuel. That is, in the case shown in Fig. 6, a ratio between the air amount and the injection fuel amount corresponds to a stoichiometric air fuel ratio. In Fig. 6, the rate of the EGR gas, that is, the EGR gas amount in the mixture gas shows the EGR gas amount necessary at the lowest for setting the temperature of the fuel and the ambient gas to the temperature lower than the temperature at which the soot is formed when the injected fuel is burned. The EGR gas amount is equal to or more than 55 % of the EGR rate, and that of the embodiment shown in Fig. 6 is equal to or more than 70 %. That is, when setting the total inlet gas amount admitted into the combustion chamber 5 to a solid line X in Fig. 6 and setting the rate between the air amount and the EGR gas amount among the total inlet gas amount X to a rate shown in Fig. 6, the temperature of the fuel and the ambient gas becomes lower than the temperature at which the soot is generated, and accordingly the soot is not completely generated. Further, the generation amount of NOx at this time is about 10 p.p.m. (g/t) or less, so that the generation amount of NOx is significantly small.

Since the combustion heat when the fuel is burned is increased as the fuel injection amount is increased, in order to maintain the temperature of the fuel and the ambient gas to the temperature lower than the temperature at which the soot is generated, it is necessary to increase the absorption amount of the heat due to the EGR gas. Accordingly, as shown in Fig. 6, the EGR gas amount should be increased in accordance that the injection fuel amount is increased. That is, the EGR gas amount should be increased as the required load becomes high.

Here, in the case where the supercharging is not performed, an upper limit of the amount X of the total inlet gas admitted into the combustion chamber 5 is Y, so that in Fig. 6, in an area having the required load larger than $L_0$,

the air fuel ratio can not be maintained to the stoichiometric air fuel ratio unless the EGR gas rate is reduced in accordance that the required load becomes greater. In other words, in the case of intending to maintain the air fuel ratio to the stoichiometric air fuel ratio in the area having the desired load larger than $L_0$ when the supercharging is not performed, the EGR rate is reduced in accordance that the required load becomes high, and accordingly, in the area having the desired load larger than $L_0$, it is impossible to maintain the temperature of the fuel and the ambient gas to the temperature lower than the temperature at which the soot is produced.

However, as shown in Fig. 1, when recirculating the EGR gas into the inlet side of the supercharger, that is, the air intake pipe 17 of the exhaust turbo charger 15 via the EGR passage 29, in the area having the required load larger than $L_0$, it is possible to maintain the EGR rate to a level equal to or more than 55 %, for example, 70 %, so that it is possible to maintain the temperature of the fuel and the ambient gas to the temperature lower than the temperature at which the soot is produced. That is, when recirculating the EGR gas so that the EGR rate within the air intake pipe 17 becomes, for example, 70 %, the EGR rate of the intake gas having a pressure increased by the compressor 16 of the exhaust turbo charger 15 also becomes 70 %, so that it is possible to maintain the temperature of the fuel and the ambient gas to the temperature at which the soot is produced so long as the compressor 16 can increase the pressure. Accordingly, it is possible to expand an operation range of the engine which can produce the low temperature combustion.

Here, in this case, when setting the EGR rate to a level equal to or more than 55 % in the area having the required load larger than $L_0$, the EGR control valve 31 is fully opened and the throttle valve 20 is slightly closed.

As mentioned above, Fig. 6 shows the case of burning the fuel under the stoichiometric air fuel ratio, however, even when setting the air amount to a level less than the air amount shown in Fig. 6, that is, setting the air fuel ratio to rich, it is possible to restrict the generation amount of NOx to approximately 10 p.p.m. or less while restricting the generation of the soot, and further, even when setting the air amount to a level more than the air amount shown in Fig. 6, that is, setting an average value of the air fuel ratio to a lean value such as 17 to 18, it is possible to restrict the generation amount of NOx to approximately 10 p.p.m. or less while restricting the generation of the soot.

That is, when the air fuel ratio is made rich, the fuel becomes excessive, however, since the combustion temperature is restricted to a low temperature, the excessive fuel does not grow up to the soot, so that the soot is not produced. Further, at this time, a significantly small amount of NOx is only produced. On the contrary, when the average air fuel ratio is lean, or even when the air fuel ratio is the stoichiometric air fuel ratio, a small amount of soot is produced if the combustion temperature becomes high. However, in accordance with the present invention, since the combustion temperature is restricted to the low temperature, the soot is not produced at all. Further, only a significantly small amount of NOx is generated.

As mentioned above, when the low temperature combustion is performed, the soot is not produced irrespective of the air fuel ratio, that is, if the air fuel ratio is whether rich or the stoichiometric air fuel ratio, or if the average air fuel ratio is lean, so that the generation amount of NOx is significantly little. Accordingly, in view of an improvement of a specific fuel consumption, it is said that it is preferable to make the average air fuel ratio lean.

In this case, it is limited to an engine middle or low load operation at which the combustion heat due to the combustion is relatively small to restrict the temperature of the fuel and the ambient gas at a time of combustion within the combustion chamber to the level equal to or less than the temperature at which the growth of the hydrocarbon stops on the way. Accordingly, in the embodiment in accordance with the present invention, at a time of the engine middle or low load operation, the temperature of the fuel and the ambient gas at a time of combustion is restricted to the temperature equal to or less than the temperature at which the growth of the hydrocarbon stops on the way so as to perform the first combustion mode, that is, the low temperature combustion, and at a time of the engine high load operation, the second combustion mode, that is, the conventionally performed combustion is performed. In this case, the first combustion mode, that is, the low temperature combustion means a combustion in which the amount of the inert gas within the combustion chamber is greater than the amount of the inert gas at which the generation amount of the soot becomes peak and the soot is hardly generated, as is apparent from the explanation mentioned above. The second combustion mode, that is, the conventionally performed combustion means a combustion in which the amount of the inert gas within the combustion chamber is smaller than the amount of the inert gas at which the generation amount of the soot becomes peak.

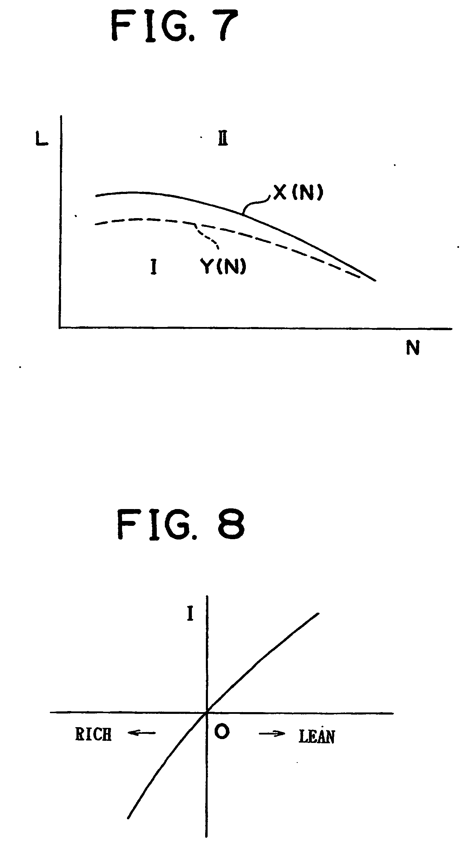

Fig. 7 shows a first operation area I in which the first combustion mode, that is, the low temperature combustion is performed and a second operation area II in which the second combustion mode, that is, the combustion in accordance with the conventional combustion method is performed. In this case, in Fig. 7, the axis of ordinate L indicates a depression amount of the acceleration pedal 50, that is, the required load, and the axis of abscissa N indicates an engine speed. Further, in Fig. 7, X(N) shows a first boundary between the first operation area I and the second operation area II, and Y(N) shows a second boundary between the first operation area I and the second operation area II. A change of the operation area from the first operation area I to the second operation area II is judged on the basis of the first boundary X(N), and a change of the operation area from the second operation area II to the first operation area I is judged on the basis of the second boundary Y(N).

That is, when the required load L exceeds the first boundary X(N) corresponding to a function of the engine speed N when the operation state of the engine is in the first operation area I and the low temperature combustion is performed, it is judged that the operation area is moved to the second operation area II, so that the combustion in accordance with the conventional combustion method is performed. Next, when the required load L becomes lower than the second boundary Y(N) corresponding to a function of the engine speed N, it is judged that the operation area shifts to the first operation area I, so that the low temperature combustion is again performed.

As mentioned above, two boundaries composed of the first boundary X(N) and the second boundary Y(N) close to the lower load than the first boundary X(N) are provided for the following two reasons. First reason is that since the combustion temperature is relatively high in a side of the high load in the second operation area II, the low temperature combustion can not be immediately performed even when the required load L becomes lower than the first boundary X(N) at this time. That is, because the low temperature combustion is started only when the required load L becomes significantly low, that is, lower than the second boundary Y(N). Second reason is that a hysteresis is provided with respect to the change of the operation area between the first operation area I and the second operation area II.

In this case, when the engine operation state exists in the first operation area I and the low temperature combustion is performed, the soot is hardly generated, and in place thereof, unburned hydrocarbon is discharged from the combustion chamber 5 as the precursor of the soot or the state prior thereto. At this time, the unburned hydrocarbon discharged from the combustion chamber 5 is well oxidized by the catalyst 25 having an oxidization function.

As the catalyst 25, an oxidation catalyst, a three way catalyst or an Nox absorbent can be employed. The NOx absorbent has a function of absorbing NOx when the average air fuel ratio within the combustion chamber 5 is lean and discharging NOx when the average air fuel ratio within the combustion chamber 5 becomes rich.

The NOx absorbent is structured such that, for example, an alumina is set as a carrier and at least one selected from an alkaline metal such as a potassium K, a sodium Na, a lithium Li and a cesium Cs, an alkaline earth metal such as a barium Ba and a calcium Ca and a rare earth metal such as a lanthanum La and an yttrium Y, and a noble metal such as a platinum Pt are carried on the carrier.

As well as the oxidation catalyst, the three way catalyst and the NOx absorbent have an oxidation function, so that as mentioned above, the three way catalyst and the NOx absorbent can be used as the catalyst 25.

Fig. 8 shows an output of the air fuel ratio sensor 27. As shown in Fig. 8, an output current I of the air fuel ratio sensor 27 is changed in accordance with the air fuel ratio A/F. Accordingly, the air fuel ratio can be known from the output current I of the air fuel ratio sensor 27.

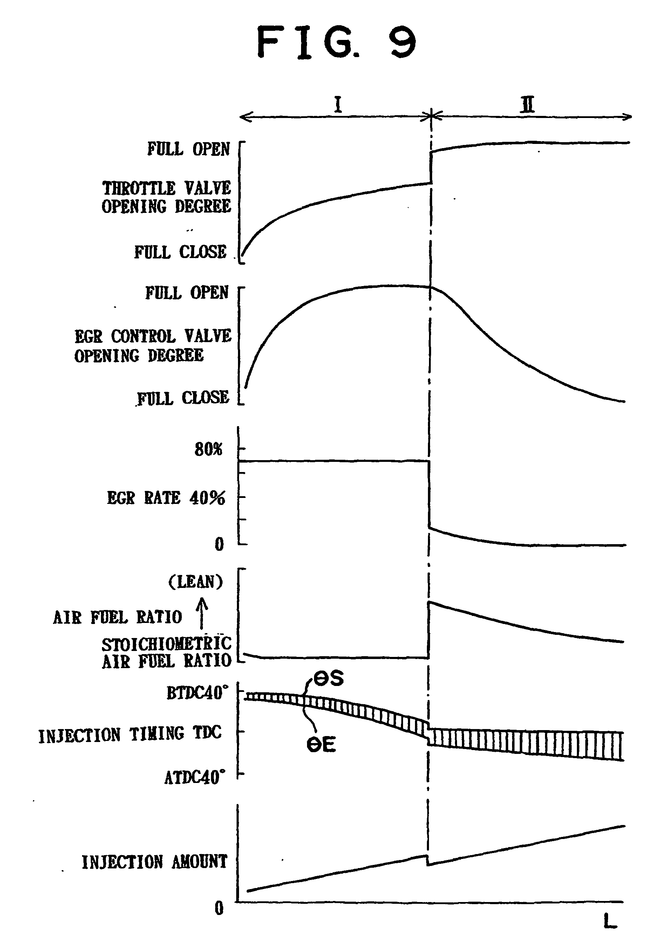

Next, the description will be in summary given of an operation control in the first operation area I and the second operation area II with reference to Fig. 9.

Fig. 9 shows an opening degree of the throttle valve 20 , an opening degree of the EGR control valve 31, an EGR rate, an air fuel ratio, an injection timing and an injection amount with respect to the required load L. As shown in Fig. 9, in the first operation area I having a low required load L, the opening degree of the throttle valve 20 is gradually increased to about two-third opening degree from a nearly full close state as the required load L is increased, and the opening degree of the EGR control valve 31 is gradually increased to a full open state from a nearly full closed state as the required load L is increased. Further, in the embodiment shown in Fig. 9, the EGR rate is set to substantially 70 % in the first operation area I, and the air fuel ratio is set to about a stoichiometric air fuel ratio.

In other words, in the first operation area I, the opening degree of the throttle valve 20 and the opening degree of the EGR control valve 31 are controlled so that the EGR rate becomes substantially 70 % and the air fuel ratio becomes slightly leaner air fuel ratio. In this case, at this time, the air fuel ratio is controlled to a target lean air fuel ratio by correcting the opening degree of the EGR control valve 31 on the basis of the output signal of the air fuel ratio sensor 27. Further, in the first operation area I, a fuel injection is performed prior to a compression top dead center TDC. In this case, an injection start timing θS is delayed in accordance that the required load L becomes high, and an injection end timing θE is also delayed in accordance that the injection start timing θS is delayed.

Further, at a time of an idling operation, the throttle valve 20 is closed near to a full closed state, and at this time, the EGR control valve 31 is also closed near to a full closed state. When closing the throttle valve 20 near to the full closed state, a pressure within the combustion chamber 5 at the beginning of the compression becomes low, so that the compression pressure becomes small. When the compression pressure becomes small, a compression work by the piston 4 becomes small, so that a vibration of the engine main body 1 is reduced. That is, at a time of the idling operation, in order to restrict the vibration of the engine main body 1, the throttle valve 20 is closed near to the fully closed state.

On the contrary, the operation area of the engine changes from the first operation area I to the second operation area II, the opening degree of the throttle valve 20 is abruptly increased from about two-third opening degree to the fully open direction . At this time, in the embodiment shown in Fig. 9, the EGR rate is abruptly reduced from substantially 70 % to 40 % or less and the air fuel ratio is abruptly increased . That is, since the EGR rate fly over the EGR rate range (Fig. 5) in which a lot of smoke is generated, a lot of smoke is not generated when the operation area of the engine changes from the first operation area I to the second operation area II.

In the second operation area II, the second combustion mode, that is, the conventionally performed combustion is performed. In accordance with this combustion method, a small amount of soot and NOx are generated, however, the heat efficiency is higher than the low temperature combustion, so that when the operation area of the engine changes from the first operation area I to the second operation area II, the injection amount is abruptly reduced as shown in Fig. 9. In this second operation area II, the throttle valve 20 is kept in the fully open state except a portion thereof, and the opening degree of the EGR control valve 31 is gradually reduced as the required load L becomes high. Further, in this operation area II, the EGR rate becomes low as the required load L becomes high, and the air fuel ratio becomes small as the required load L becomes high. However, the air fuel ratio is set to the lean air fuel ratio even when the required load L becomes high. Further, in the second operation area II, the injection start timing θS is set near the compression top dead center TDC.

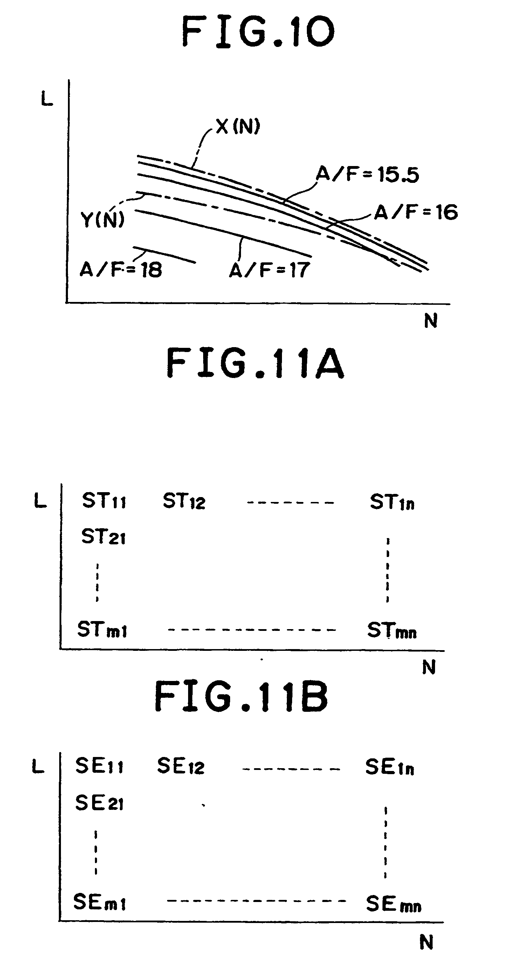

Fig. 10 shows an air fuel ratio A/F in the first operation area I. In Fig. 10, curves indicated by A/F = 15.5, A/F = 16, A/F = 17 and A/F = 18 respectively show states having air fuel ratios 15.5, 16, 17 and 18, each of the air fuel ratios between the curves is defined in accordance with a proportional allotment. As shown in Fig. 10, the air fuel ratio becomes lean in the first operation area I, and further, in the first operation area I, the air fuel ratio A/F is made lean in accordance that the required load L becomes low.

That is, the heat due to the combustion is reduced as the required load L becomes low. Accordingly, the low temperature combustion can be performed even when lowering the EGR rate as the required load L becomes low. When lowering the EGR rate, the air fuel ratio becomes large, so that as shown in Fig. 10, the air fuel ratio A/F is made large as the required load L becomes low. As the air fuel ratio A/F is increased, the specific fuel consumption is improved, so that in order to make the air fuel ratio as lean as possible, in accordance with the embodiment of the present invention, the air fuel ratio A/F is made large as the required load L becomes low.

In this case, a target opening degree ST of the throttle valve 20 necessary for setting the air fuel ratio to the target air fuel ratio as shown in Fig. 10 is previously stored within the ROM 42 as a function of the required load L and the engine speed N in the form of a map as shown in Fig. 11A, and a target opening degree SE of the EGR control valve 31 necessary for setting the air fuel ratio to the target air fuel ratio shown in Fig. 10 is previously stored within the ROM 42 as a function of the required load L and the engine speed N in the form of a map as shown in Fig. 11B.

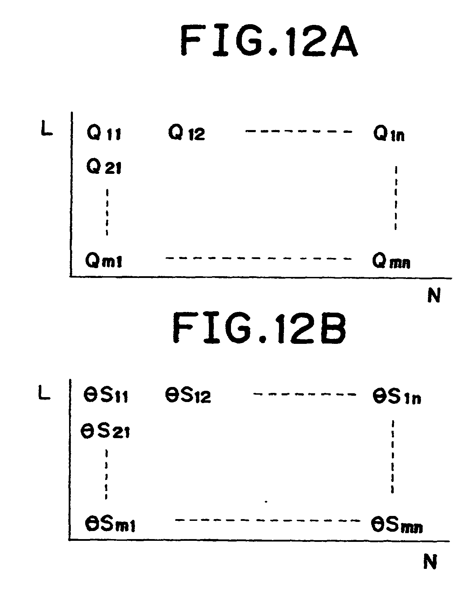

Further, an injection amount Q when the first combustion mode is performed is controlled in accordance with the required load L and the engine speed N, and the injection amount Q is previously stored within the ROM 42 as a function of the required load L and the engine speed N in the form of a map as shown in Fig. 12A. Still further, an optimum injection start timing θS when the first combustion mode is performed is previously calculated by an experiment, and the optimum injection start timing θS is previously stored within the ROM 42 as a function of the required load L and the engine speed N in the form of a map as shown in Fig. 12B.

However, since an engine is likely to be vibrated during an idling operation of an engine, the throttle valve is closed near to a full close state at a time of the idling operation, and the EGR control valve is closed near to a full close state so that an optimum amount of the EGR gas can be obtained in accordance with the required load, it is necessary to control, for example, the rotating speed and the negative pressure of the intake air pipe to a certain target value in order to restrict the engine vibration during the idling operation.

Then, in order to restrict the vibration, it is necessary to set the rotating speed to a certain target rotating speed, set the negative pressure of the inlet pipe to a certain target negative pressure, set the air fuel ratio to a certain target air fuel ratio and set the pressure change within the combustion chamber 5 to a certain target pressure change . However, there is a close relation between the parameters, so that when controlling so as to set a certain parameter to a target value and next controlling so as to set the other parameter to a target value, an actual value of the already controlled parameter is changed, and accordingly, it is necessary to again control so as to set the parameter to a target value. That is, in order to set an actual value of each of the parameters to a target value, it is necessary to control each of the parameters in accordance with a certain determined order.

Then, when the idling operation is performed, it is preferable to at first correct the opening degree ST of the throttle valve 20 so as to set the actual rotating speed to the target rotating speed and next correct the opening degree SE of the EGR valve 31 so as to set the negative pressure of the suction pipe to the target negative pressure of the suction pipe. However, when setting the negative pressure of the suction pipe to the target negative pressure of the suction pipe, the actual amount of the suction air is changed, so that the rotating speed is changed. However, this change is smaller than the change in the case of correcting the opening degree SE of the EGR valve 31, for example, so as to set the actual rotating speed to the target rotating speed and next correcting the opening degree ST of the throttle valve 20 so as to set the actual negative pressure of the suction pipe to the target negative pressure of the suction pipe. That is, the control of the rotating speed and the negative pressure of the suction pipe can rather set the parameters to the target values early.

As mentioned above, after the opening degrees of the throttle valve 20 and the EGR valve 31 are corrected, the injected fuel amount is corrected so as to set the air fuel ratio to the target air fuel ratio. That is, when the injected fuel amount for setting the air fuel ratio to the target air fuel ratio is corrected on the basis of the amount of the suction air, no great influence is given to the rotating speed and the negative pressure of the suction pipe even when the amount of the injected fuel is corrected further in this stage, so that it is not necessary to again control the throttle valve 20 and the EGR valve 31 so as to set the parameters to the target values.

As mentioned above, after the amount of the injected fuel is corrected, the fuel injection timing is corrected so as to set the pressure change within the combustion chamber 5 to the target pressure change. In this case, even when the fuel injection timing is corrected at this stage, no great influence is given to the rotating speed, the negative pressure of the suction pipe and the fuel injection amount, the necessity of again controlling so as to set the parameters to the target values, if being generated, is significantly small.

As mentioned above, in the case of correcting the operation of the engine constituting elements so as to set a certain parameter to the target value, if it is necessary to again correct the operation of the engine constituting element corrected prior to the correction, the necessity is significantly small, so that there is a significantly little possibility that each of the target values diverges and a hunting on a control is caused. Accordingly, it is possible to early set the parameter which needs the control for restricting the engine vibration during the idling operation to the target value.

In order to execute the control, it is necessary to place the pressure sensor in the surge tank 12 shown in Fig. 1 for detecting the negative pressure of the suction pipe and the combustion pressure sensor within the combustion chamber 5 for detecting the pressure within the combustion chamber 5. Further, it is preferable to set a boundary Z(N) smaller than a boundary Y(N) between the second operation area II and the first operation area I shown in Fig. 7 and correct each of the parameters at a time of the idling in the case where the detected value is smaller than the boundary Z(N).

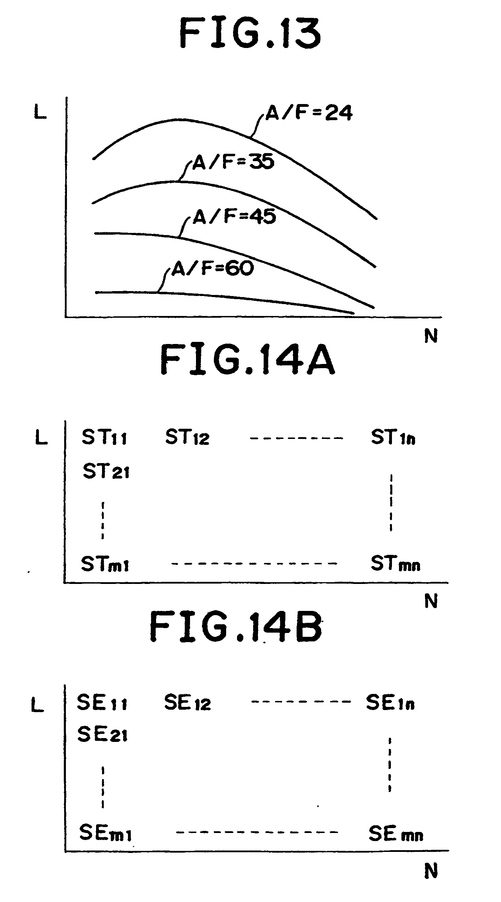

Fig. 13 shows a target air fuel ratio when the second combustion mode, that is, the combustion in accordance with the conventional combustion method is performed. In this case, in Fig. 13, curves indicated by A/F = 24, A/F = 35, A/F = 45 and A/F = 60 respectively show states having target air fuel ratios 24, 35, 45 and 60. A target opening degree ST of the throttle valve 20 necessary for setting the air fuel ratio to the target air fuel ratio is previously stored within the ROM 42 as a function of the required load L and the engine speed N in the form of a map as shown in Fig. 14A, and a target opening degree SE of the EGR control valve 31 necessary for setting the air fuel ratio to the target air fuel ratio is previously stored within the ROM 42 as a function of the required load L and the engine speed N in the form of a map as shown in Fig. 14B.

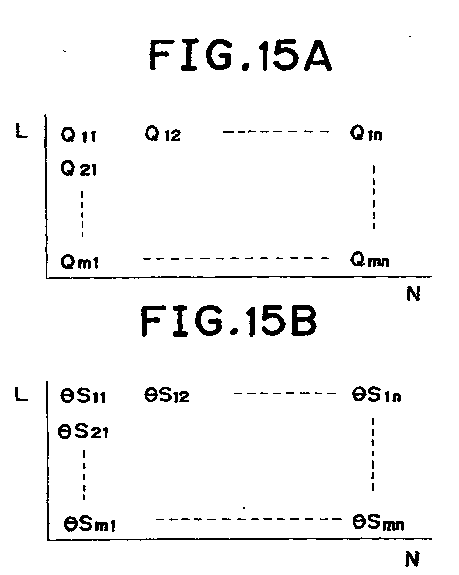

Further, the injection amount Q when the second combustion mode is performed is controlled in accordance with the required load L and the engine speed N, and the injection amount Q is previously stored within the ROM 42 as a function of the required load L and the engine speed N in the form of a map as shown in Fig. 15A. Still further, an optimum injection start timing θS when the second combustion mode is performed is also previously calculated by an experiment, and the optimum injection start timing θS is previously stored within the ROM 42 as a function of the required load L and the engine speed N in the form of a map as shown in Fig. 15B.

As mentioned above, the optimum injection start timing θS according to the first combustion mode is stored in the map shown in Fig. 12B. However, as mentioned at the beginning, the optimum injection timing θs is changed in accordance with the environmental condition, for example, the climate, so that even when controlling the injection start timing to the optimum injection start timing θS previously determined in accordance with the operation state of the engine and shown in Fig. 12B, the smoke or misfire is generated when the environmental condition is changed.

That is, when the injection start timing is delayed in comparison with the optimum injection start timing θs, the combustion is gradually deteriorated and finally the misfire is generated. In this case, the torque change of the engine output is increased as the combustion is deteriorated, so that it is possible to judge on the basis of the torque change amount of the engine output whether or not the combustion is deteriorated. Further, the torque change amount of the engine output becomes gradually smaller as the injection start timing is quickened, however, when the injection start timing is quickened too much, the smoke is generated at this time. Accordingly, if the torque change amount of the engine output is controlled within a certain range, an improved combustion in which no misfire nor smoke is generated can be obtained.

Then, in accordance with the first embodiment of the present invention, it is structured to calculate an average value of the torque change amount of the engine output so as to quicken the injection start timing and prevent the misfire from generating when the average torque change amount becomes greater than an upper limit value MAX and to delay the injection start timing and prevent the smoke from generating when the average torque change amount becomes smaller than a lower limit value MIN.

As mentioned above, in accordance with the present invention, the injection start timing θs is controlled on the basis of the torque change amount of the engine output. Then, at first, an example of a method of calculating the torque change amount will be in summary described below.

For example, in the case of referring an angular velocity of a crank shaft at a time when the crank shaft rotates from a compression top dead center (hereinafter, refer to as a TDC) to an after compression top dead center (hereinafter, refer to as an ATDC) 30 degrees to as a first angular velocity $\varpi a$ and referring an angular velocity of the crank shaft at a time when the crank shaft rotates from the ATDC 60 degrees to the ATDC 90 degrees to as a second angular

velocity $\varpi b$, the angular velocity of the crank shaft is ascended from the first angular velocity $\varpi a$ to the second angular velocity $\varpi b$ due to the combustion pressure when the combustion is performed in each of the cylinders. At this time, when setting a moment of inertia of the engine rotation to I, a kinetic energy is increased from $(1/2)I\varpi a^2$ to $(1/2)I\varpi b^2$ due to the combustion pressure. In summary, since the torque is generated by an increased amount $(1/2)I(\varpi b^2 - \varpi a^2)$ of the kinetic energy, the generated torque is proportional to $(\varpi b^2 - \varpi a^2)$. Accordingly, the generated torque can be calculated from the remainder between a square of the first angular velocity $\varpi a$ and a square of the second angular velocity $\varpi b$.

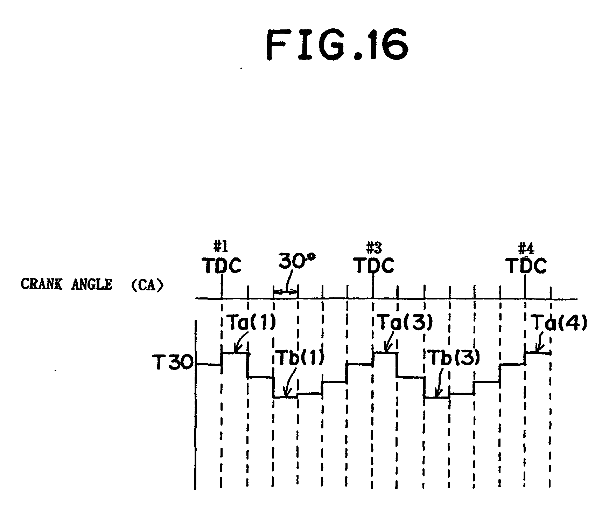

Next, the description will be given of a method of calculating the torque generated by each of the cylinders with reference to Fig. 16 with exemplifying the case that the internal combustion engine shown in Fig. 1 is constituted by a four cylinder internal combustion engine. As mentioned above, the crank angle sensor 52 generates an output pulse at every time when the crank shaft rotates at the crank angle of 30 degrees, and the crank angle sensor 52 is arranged in such a manner as to generate the output pulse at the compression upper dead center TDC of a first cylinder C1, a second cylinder C2, a third cylinder C3 and a fourth cylinder C4. Accordingly, the crank angle sensor 52 generates the output pulse at every crank angle of 30 degrees from the TDC of each of the cylinders C1, C2, C3 and C4. In this case, an order of ignition in the internal combustion engine employed for the present invention is 1-3-4-2.

In Fig. 16, the axis of ordinate T30 indicates an elapsed time of the crank angle of 30 degrees after the crank angle sensor 52 generates the output pulse and before it generates the next output pulse. Further, Ta(i) indicates an elapsed time from the TDC of the cylinder of number i to the ATDC 30 degrees, and Tb(i) indicates an elapsed time from the ATDC 60 degrees of the cylinder of number i to the ATDC 90 degrees. Accordingly, for example, Ta(1) indicates an elapsed time from the TDC of the first cylinder to the ATDC 30 degrees, and Tb(1) indicates an elapsed time from the ATDC 60 degrees of the first cylinder to the ATDC 90 degrees. Further, when dividing the crank angle of 30 degrees by the elapsed time T30, the divided result expresses an angular velocity $\varpi$. Accordingly, the crank angle/Ta(i) of 30 degrees expresses the first angular velocity $\varpi a$ in the first cylinder, and the crank angle/Tb(i) of 30 degrees expresses the second angular velocity $\varpi b$ in the first cylinder.

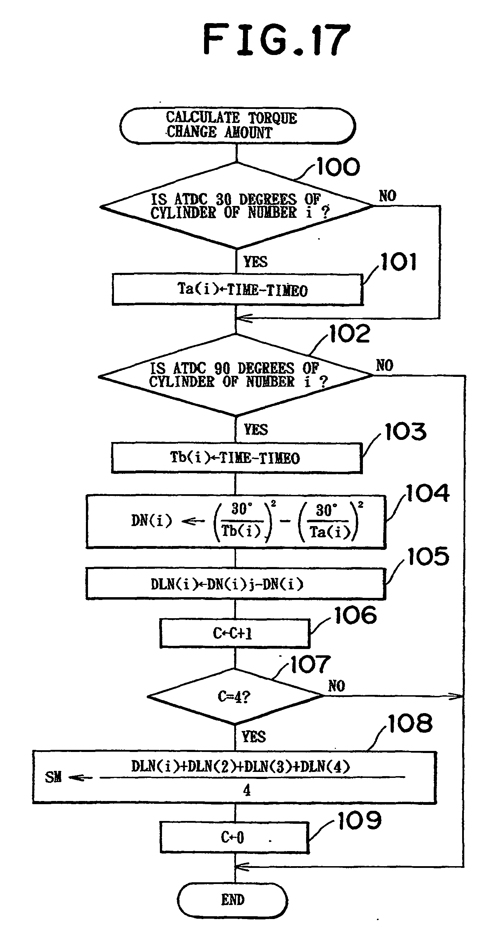

Fig. 17 shows a routine for calculating the torque change amount in the first embodiment applied to an internal combustion engine shown in Fig. 1 and operated according to the Figs. 2-15B, and the routine is executed by an interruption per a crank angle of 30 degrees.

With reference to Fig. 17, at first, in step 100, it is judged whether or not a current position is at the ATDC 30 degrees of the cylinder of number i. In the case where the current position is not at the ATDC 30 degrees of the cylinder of number i, the process goes to step 102 where it is judged whether or not the current position is at the ATDC 90 degrees of the cylinder of number i. In the case where the current position is not at the ATDC 90 degrees of the cylinder of number i, the process cycle is finished.

On the contrary, in step 100, when it is judged that the current position is at the ATDC 30 degrees of the cylinder of the number i, the process goes to step 101, and the elapsed time Ta(i) from the TDC of the cylinder of number i to the ATDC 30 degrees is calculated on the basis of the remainder between a current time TIME and a time TIME0 before the crank angle of 30 degrees. Next, in step 102, when it is judged that the current position is at the ATDC 90 degrees of the cylinder of number i, the process goes to step 103 where the elapsed time Tb(i) from the ATDC 60 degrees of the cylinder of number i to the ATDC 90 degrees is calculated on the basis of the remainder between the current time TIME and a time TIME0 before the crank angle of 30 degrees.

Next, in step 104, a generated torque DN(i) of the cylinder of number i is calculated on the basis of the following formula.

$$DN(i)=(\varpi b^2-\varpi a^2)=(30°/Tb(i))^2-(30°/Ta(i))^2$$

Next, in step 105, a torque change amount DLN(i) during one cycle in the same cylinder is calculated on the basis of the following formula.

$$DLN(i)=DN(i)_j- DN(i)$$

Here, DN(i)j expresses a generated torque in the same cylinder one cycle (a crank angle of 720 degrees) before the DN(i).

Next, a count value C is incremented at only 1 in step 106. Next, in step 107, it is judged whether or not the count value C becomes 4, that is, whether or not the torque change amount DLN(i) is calculated with respect to all of the cylinders. When the relation C = 4 is established, the process goes to step 108, and an average value of the torque change amounts DLN(i) in all of the cylinders is set to a final torque change amount SM on the basis of the following formula.

$$SM=(DLN(1)+ DLN(2)+ DLN(3)+ DLN(4))/4$$

Next, in step 109, the count value C is set to 0.

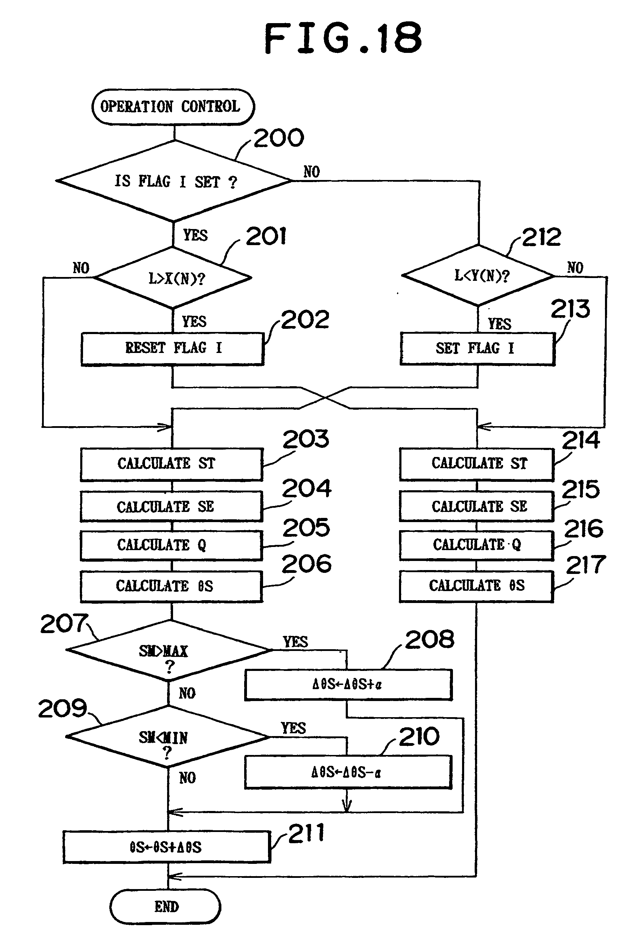

Next, the description will be given of a routine for executing the operation control in accordance with the first embodiment below with reference to Fig. 18. In this case, the routine is executed by an interruption per a fixed crank angle.

With reference to Fig. 18, at first, in step 200, it is judged whether or not a flag I showing that the operation area of the engine is in the first operation area I. When the flag I is set, that is, the operation area of the engine is in the first operation area I, the process goes to step 201, so that it is judged whether or not the required load L becomes greater than the first boundary X1 (N). When a relation $L \leq X1$ (N) is established, the process goes to step 203, and the low temperature combustion is performed.

That is, in step 203, the target opening degree ST of the throttle valve 20 is calculated from a map shown in Fig. 11A, and the opening degree of the throttle valve 20 is set to the target opening degree ST. Next, in step 204, the target opening degree SE of the EGR control valve 31 is calculated from a map shown in Fig. 11B, and the opening degree of the EGR control valve 31 is set to the target opening degree SE. Next, in step 205, the injection amount Q is calculated on the basis of the map shown in Fig. 12A, and next, in step 206, an optimum injection start timing θS is calculated with respect to the required load L and the engine speed N on the basis of the map shown in Fig. 12B.

Next, in step 207, it is judged whether or not the average torque change amount SM is greater than the upper limit value MAX. When the relation SM > MAX is established, the process goes to step 208 and a fixed value $\alpha$ is added to a correction value $\Delta\theta S$ with respect to the injection start timing θS. Next, the process goes to step 211, and a final injection start timing θS is calculated by adding the correction value $\Delta\theta S$ to the injection start timing θS calculated from the map shown in Fig. 12B. The injection start timing θs is expressed by an amount of an angle of lead, so that it can be understood that when the relation SM > MAX is established, the injection start timing θS is quickened.

On the contrary, in step 207, when it is judged that the relation $SM \leq MAX$ is established, the process goes to step 209, and it is judged whether or not the average torque change amount SM is smaller than the lower limit MIN. When the relation SM < MIN is established, the process goes to step 210, and the fixed value $\alpha$ is subtracted from the correction value $\Delta\theta S$. Next, the process goes to step 211. Accordingly, at this time, the injection start timing θS is delayed.

On the contrary, in step 209, when it is judged that the relation $SM \geq MIN$ is established, the process goes to step 211. Accordingly, when the relation $MAX \geq SM \geq MIN$ is established, a renewing operation of the correction value $\Delta\theta S$ is not performed.

On the contrary, in step 201, when it is judged that the relation L > X(N) is established, the process goes to step 202, a flag I is reset, and next, the process goes to step 214 and the second combustion mode is performed.

That is, in step 214 , the target opening degree ST of the throttle valve 20 is calculated from a map shown in Fig. 14A, and the opening degree of the throttle valve 20 is set to the target opening degree ST. Next, in step 215, the target opening degree SE of the EGR control valve 31 is calculated from a map shown in Fig. 14B, and the opening degree of the EGR control valve 31 is set to the target opening degree SE. Next, in step 216, the injection amount Q is calculated on the basis of the map shown in Fig. 15A, and next, in step 217, the injection start timing θS is calculated on the basis of the map shown in Fig. 15B.

When the flag I is reset, in the next process cycle, the process goes to step 212 from step 200 and it is judged whether or not the required load L becomes lower than the second boundary Y(N). When the relation $L \geq Y(N)$ is established, the process goes to step 214 and the second combustion mode is performed at a lean air fuel ratio.

On the contrary, in step 212, when it is judged that the relation L < Y(N) is established, the process goes to step 213, the flag I is set, and next the process goes to step 203 and the low temperature combustion is performed.

Next, a second embodiment in accordance with the present invention will be described below. In accordance with the second embodiment of the present invention, it is structured to calculate the torque change amount of the engine output at each of the cylinders so as to quicken the injection start timing of the corresponding cylinder and prevent the misfire from generating when the torque change amount in each of the cylinders becomes greater than the upper limit value MAX and to delay the injection start timing of the corresponding cylinder and prevent the smoke from generating when the torque change amount in each of the cylinders becomes smaller than the lower limit value MIN.

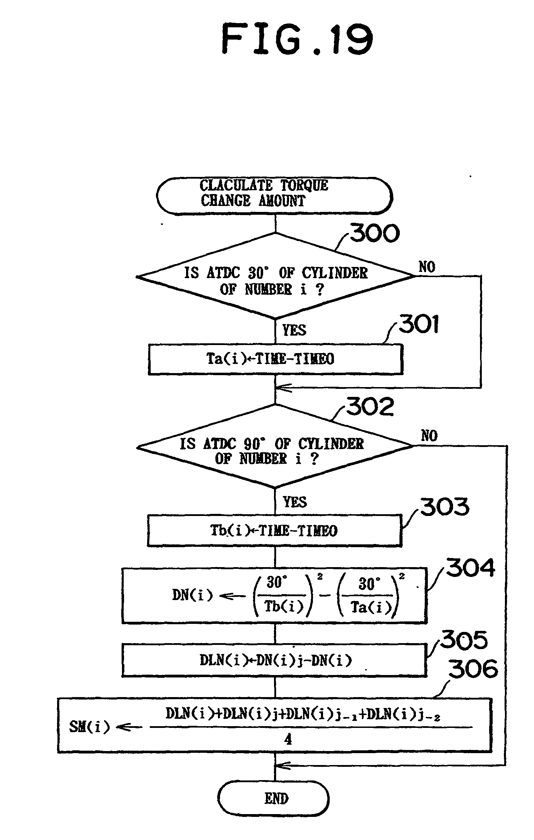

Fig. 19 shows a routine for calculating the torque change amount in the second embodiment, and the routine is executed by an interruption per a crank angle of 30 degrees.

With reference to Fig. 19, at first, in step 300, it is judged whether or not a current position is at the ATDC 30 degrees of the cylinder of number i. In the case where the current position is not at the ATDC 30 degrees of the cylinder of number i, the process jumps to step 302, and it is judged whether or not the current position is at the ATDC 90 degrees of the cylinder of number i. In the case where the current position is not at the ATDC 90 degrees of the cylinder of number i, the process cycle is finished.

On the contrary, in step 300, when it is judged that the current position is at the ATDC 30 degrees of the cylinder of the number i, the process goes to step 301, and the elapsed time Ta(i) from the TDC of the cylinder of number i to the ATDC 30 degrees is calculated on the basis of the remainder between a current time TIME and a time TIME0 before the crank angle of 30 degrees. Next, in step 302, when it is judged that the current position is at the ATDC 90 degrees of the cylinder of number i, the process goes to step 303, and the elapsed time Tb(i) from the ATDC 60 degrees of the cylinder of number i to the ATDC 90 degrees is calculated on the basis of the remainder between the current time TIME and a time TIME0 before the crank angle of 30 degrees.

Next, in step 304, a generated torque DN(i) of the cylinder of number i is calculated on the basis of the following formula.

$$DN(i) = (\varpi b^2 - \varpi a^2) = (30°/Tb(i))^2 - (30°/Ta(i))^2$$

Next, in step 305, a torque change amount DLN(i) during one cycle in the same cylinder is calculated on the basis of the following formula.

$$DLN(i) = DN(i)_j - DN(i)$$

Here, $DN(i)_j$ indicates a generated torque in the same cylinder one cycle (a crank angle of 720 degrees) before the DN(i).

Next, in step 306, an average value SM(i) of the torque change amount in the cylinder of number i is calculated on the basis of the following formula.

$$SM(i) = (DLN(i) + DLN(i)_j + DLN(i)_{j-1} + DLN(i)_{j-2})/4$$

Here, $DLN(i)_j$ indicates a torque change amount of the cylinder of number i one cycle before, $DLN(i)_{j-1}$ expresses the torque change amount of the cylinder of number i two cycles before, and $DLN(i)_{j-2}$ indicates the torque change amount of the cylinder of number i three cycles before.

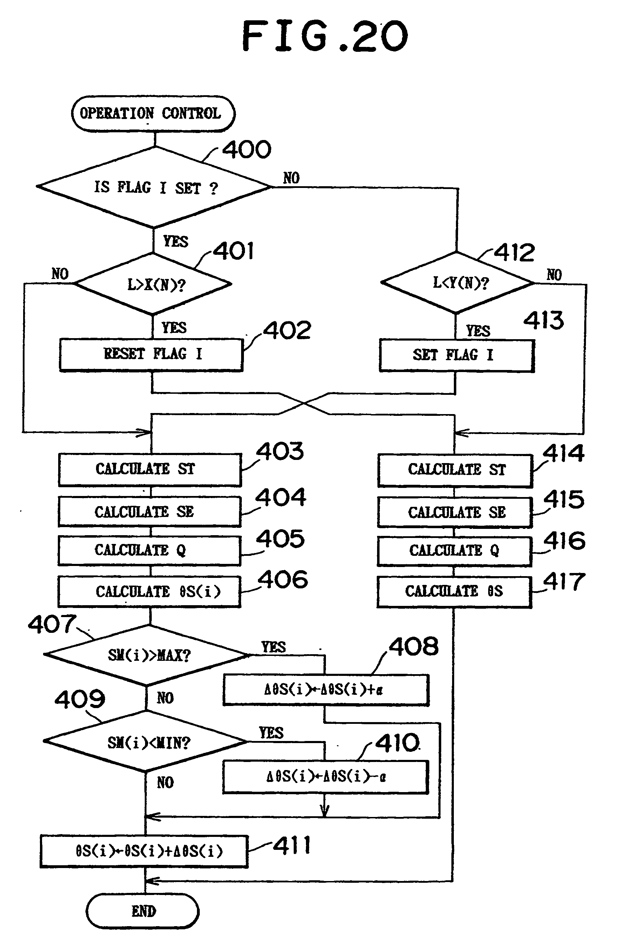

Next, the description will be given of a routine for executing the operation control in accordance with the second embodiment below with reference to Fig. 20. In this case, the routine is executed by an interruption per a fixed crank angle.

With reference to Fig. 20, at first, in step 400, it is judged whether or not a flag I showing that the operation area of the engine is in the first operation area I. When the flag I is set, that is, the operation area of the engine is in the first operation area I, the process goes to step 401, so that it is judged whether or not the required load L becomes greater than the first boundary X1 (N). When a relation L ≤ X1 (N) is established, the program goes to step 403, and the low temperature combustion is performed.

That is, in step 403, the target opening degree ST of the throttle valve 20 is calculated from a map shown in Fig. 11A, and the opening degree of the throttle valve 20 is set to the target opening degree ST. Next, in step 404, the target opening degree SE of the EGR control valve 31 is calculated from a map shown in Fig. 11B, and the opening degree of the EGR control valve 31 is set to the target opening degree SE. Next, in step 405, the injection amount Q is calculated on the basis of the map shown in Fig. 12A, and next, in step 406, an optimum injection start timing θS(i) is calculated with respect to the required load L and the engine speed N on the basis of the map shown in Fig. 12B.

Next, in step 407, it is judged whether or not the average torque change amount SM(i) of the cylinder of number i is greater than the upper limit value MAX . When the relation SM(i) > MAX is established, the process goes to step 408 and a fixed value $\alpha$ is added to a correction value A$\theta$S(i) with respect to the injection start timing $\theta$S(i) of the cylinder of number i. Next, the process goes to step 411, and a final injection start timing $\theta$S(i) is calculated by adding the correction value $\Delta\theta$S(i) to the injection start timing $\theta$S(i) of the cylinder of number i calculated from the map shown in Fig. 12B. As mentioned above, the injection start timing $\theta$s is expressed by an amount of an angle of lead, so that it can be understood that when the relation SM(i) > MAX is established, the injection start timing $\theta$S(i) of the cylinder of number i is quickened.

On the contrary, in step 407, when it is judged that the relation SM(i) $\leq$ MAX is established, the process goes to step 409, and it is judged whether or not the average torque change amount SM(i) of the cylinder of number i is smaller than the lower limit MIN. When the relation SM(i) < MIN is established, the process goes to step 410, and the fixed value $\alpha$ is subtracted from the correction value $\Delta\theta$S (i) with respect to the cylinder of number i. Next, the process goes to step 411. Accordingly, at this time, the injection start timing $\theta$S(i) of the cylinder of number i is delayed.

On the contrary, in step 409, it is judged that the relation SM(i) $\geq$ MIN is established, the process goes to step 411. Accordingly, when the relation MAX $\geq$ SM(i) $\geq$ MIN is established, a renewing operation of the correction value $\Delta\theta$S (i) with respect to the cylinder of number i is not performed.

On the contrary, in step 401, when it is judged that the relation L > X(N) is established, the process goes to step 402, a flag I is reset, and next, the process goes to step 414 and the second combustion mode is performed.

That is, in step 414 , the target opening degree ST of the throttle valve 20 is calculated from a map shown in Fig. 14A, and the opening degree of the throttle valve 20 is set to the target opening degree ST. Next, in step 415, the target opening degree SE of the EGR control valve 31 is calculated from a map shown in Fig. 14B, and the opening degree of the EGR control valve 31 is set to the target opening degree SE. Next, in step 416, the injection amount Q is calculated on the basis of the map shown in Fig. 15A, and next, in step 417, the injection start timing $\theta$S is calculated on the basis of the map shown in Fig. 15B.

When the flag I is reset, in the next process cycle, the process goes to step 412 from step 400 and it is judged whether or not the required load L becomes lower than the second boundary Y(N). When the relation L $\geq$ Y (N) is established, the process goes to step 414 and the second combustion mode is performed under a lean air fuel ratio.

On the contrary, in step 412, when it is judged that the relation L < Y(N) is established, the process goes to step 413, the flag I is set, and next the process goes to step 403 and the low temperature combustion is performed. Also, according to the first/second embodiment of the invention, wherein the injection timing is delayed or advanced by the fixed value $\alpha$, when the detected torque change amount lies below the lower limit value MIN or beyond the upper limit value MAX, the injection timing is not limited to this control. Alternatively, the injection timing may also be controlled in any other manner, provided that the detected torque change amount is taken into consideration. For example, the control of the injection timing can be made in dependence on the detected torque change amount such that the injection timing is quickened or delayed when the detected torque change amount is not within the predetermined range.

Here, as shown in Fig. 9 mentioned above, in the case of switching from the first combustion mode to the second combustion mode, it is necessary to determine the injection amount in addition to the above mentioned control of the injection timing so that the output torque of the engine is not changed when the injection amount is abruptly reduced.

Then, contents of the additional injection amount control at a time of switching the combustion state will be described below.

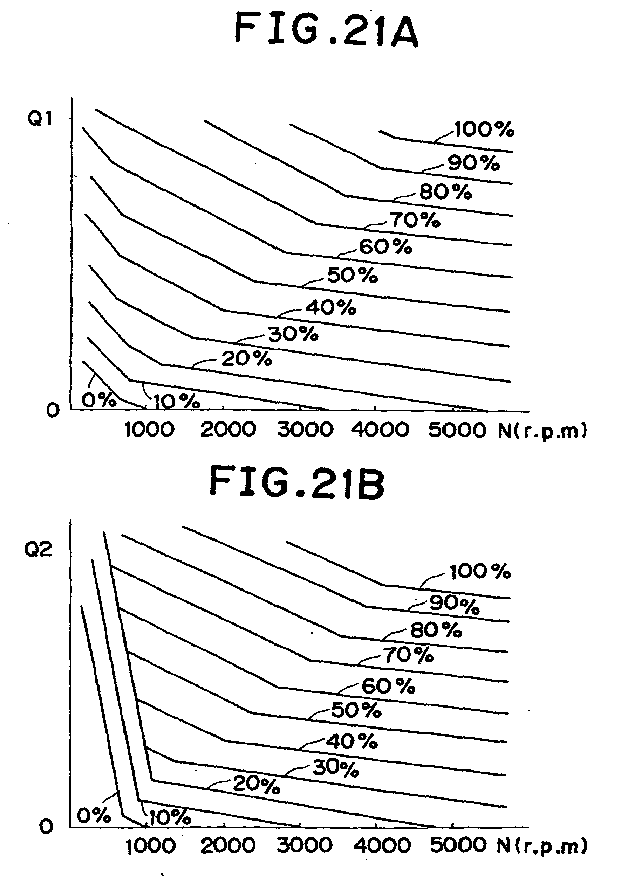

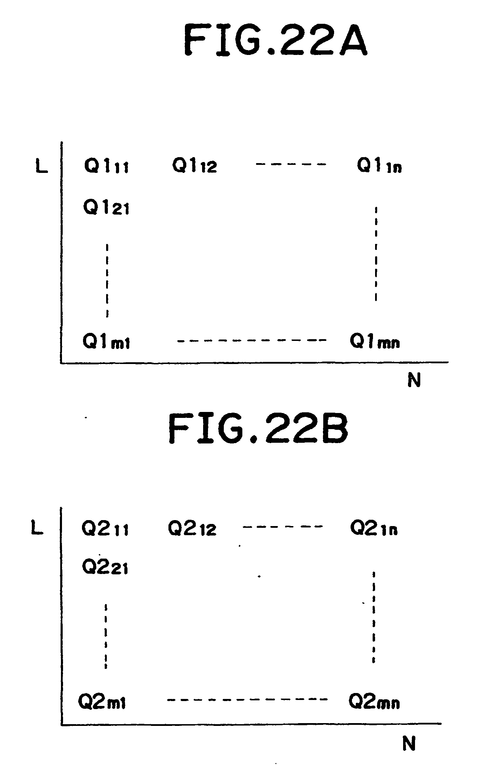

The second combustion mode has a thermal efficiency slightly better than the first combustion mode, so that the fuel injection amount necessary for obtaining the same engine output torque is less in the second combustion mode than in the first combustion mode. Accordingly, since the injection amount when the depression amount of the acceleration pedal 50 is the same and the engine speed N is the same is structured to make the injection amount Q1 when the first combustion mode is performed in all the operation area except the low rotating area greater than the injection amount Q2 when the second combustion mode is performed, the injection amount Q1 when the first combustion mode is performed as shown in Fig. 21A is stored within the ROM 42 as a function of the engine speed N and the depression amount of the acceleration pedal 50 (that is, the required load) in the form of the map shown in Fig. 22A, and the injection amount Q2 when the second combustion mode is performed as shown in Fig. 21B is stored within the ROM 42 as a function of the engine speed N and the depression amount of the acceleration pedal 50 (that is, the required load) in the form of the map shown in Fig. 22B. It is possible to store the injection amounts Q1 and Q2 within the ROM 42 in the form of the function.

In this case, in Figs. 21A and 21B, each of solid lines indicates a line connecting points at which the depression amount of the acceleration pedal 50 is equal to each other, and numerals in each of the solid lines expresses the depression amount of the acceleration pedal 50 expressed by percent.

Further, as shown in Fig. 21B, under the second combustion mode, in order to prevent the engine stall from generating when the engine speed N is lowered, in the low rotating area, the injection amount Q2 is suddenly increased as the engine speed N is lowered with respect to the same depression amount of the acceleration pedal. However, under the first combustion mode, in the case where the injection amount is suddenly increased when the engine speed N is lowered, the air fuel ratio becomes excessively dense, that is, excessively rich. When the air fuel ratio becomes excessively rich, the misfire is generated due to a shortage of an air, so that the engine stall is generated more easily.

Then, when the first combustion mode is performed as shown in Fig. 21A, the structure is made such as to make an increasing rate of the injection amount Q1 in the low rotating area when the engine speed N is lowered smaller than that in the second combustion mode shown in Fig. 21B so that the air fuel ratio does not become excessively rich.

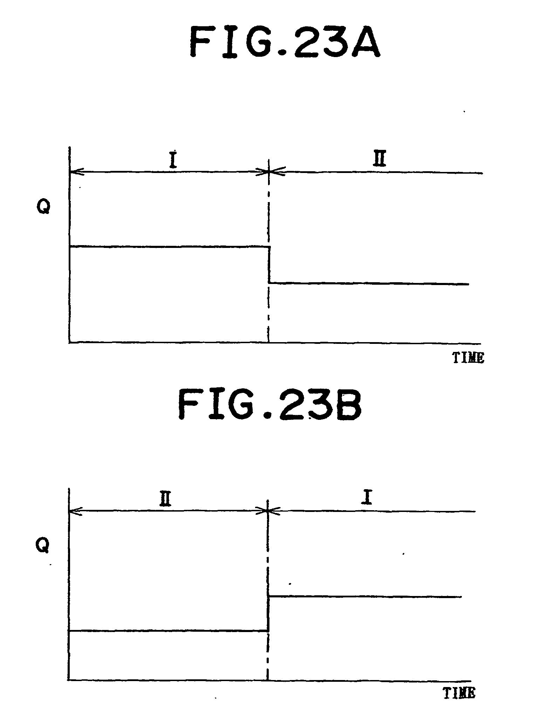

Accordingly, when the first combustion mode is performed, the injection amount Q1 is always calculated on the basis of the map shown in Fig. 22A, and when the second combustion mode is performed, the injection amount Q2 is calculated on the basis of the map shown in Fig. 22B, so that when the operation state of the engine moves from the first operation area I to the second operation area II as shown in Fig. 23A, the injection amount Q is immediately reduced, and when the operation state of the engine moves from the second operation area II to the first operation area I as shown in Fig. 23B, the injection amount Q is immediately increased. Further, it is possible to increase and reduce the injection amount in a state of a predetermined time delaying from the switching timing of the operation state. Accordingly, it is possible to reduce the output torque change at a time of switching the combustion state.

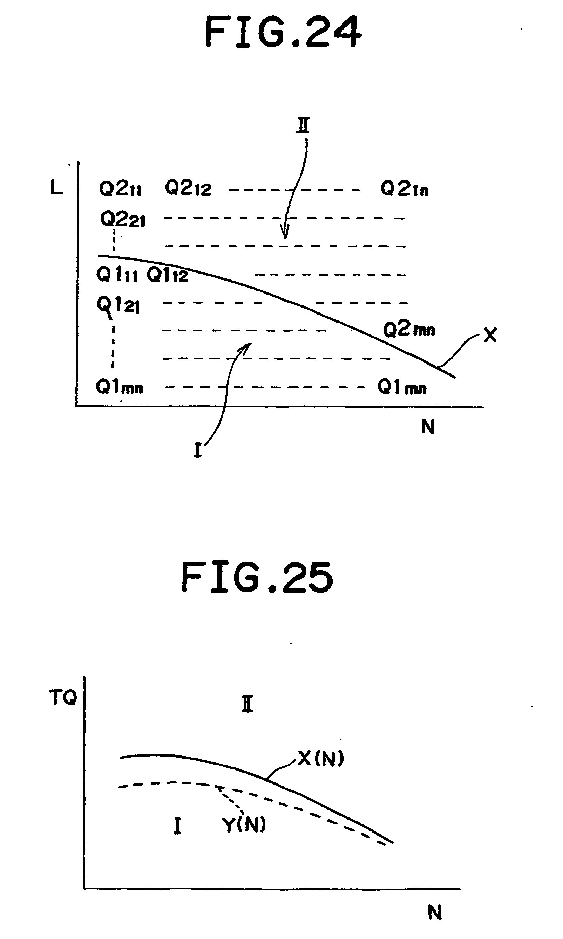

In the embodiment mentioned above, it is structured such that the fuel injection amount is calculated on the basis of the depression amount of the accelerator pedal and the engine speed. In particular, the structure is made to previously store the fuel injection amount as a function of the depression amount of the acceleration pedal and the engine speed in the form of a map and calculate the fuel injection amount from the map. However, when calculating the fuel injection amount by using the map mentioned above, there is a risk that it is hard to set the injection amount when it is necessary to reduce the fuel injection amount at a time of switching from the first combustion mode to the second combustion mode. The reason will be described below with reference to Fig. 24. In Fig. 24, reference symbol L denotes a depression amount of the acceleration pedal, reference symbol N denotes an engine speed, and reference symbol X denotes a boundary between the operation area I in which the first combustion mode is performed and the operation area II in which the second combustion mode is performed, respectively. In this case, as shown in Fig. 24, when the structure is made to store the fuel injection amount Q1 with respect to the operation area I as a function of the depression amount L of the acceleration pedal and the engine speed N in the form of a map and also store the fuel injection amount Q2 with respect to the operation area II as a function of the depression amount L of the acceleration pedal and the engine speed N in the form of a map, it is hard to set the fuel injection amount near the boundary X.

That is, it is important to prevent a torque difference from generating when the required load L exceeds the boundaryX, and in order to obtain the effect, it is necessary to set the fuel injection amount Q1 and the fuel injection amount Q2 at all the points on the boundary X in such a manner that the same torque is generated at all the points on the boundary X. However, in order to calculate the fuel injection amount Q1 and Q2 in which the torque is equal to each other at each of the points on the boundary X, it is necessary to determine the fuel injection amount Q1 and Q2 on the basis of an experiment with respect to each of the points on the boundary X, so that a significant difficulty is taken for calculating the fuel injection amount Q1 and Q2 on the boundary X.

Then, it is structured to calculate the required torque of the engine and calculate the fuel injection amount on the basis of the calculated required torque and engine speed when either the first combustion mode or the second combustion mode is performed. Accordingly, it is possible to prevent the output torque from changing at a time of switching between the first combustion mode and the second combustion mode without a necessity of a complex work.

At first, with reference to Fig. 25, there is shown a first operation area I in which the first combustion mode, that is, the low temperature combustion is performed and a second operation area II in which the second combustion mode, that is, the combustion in accordance with the conventional combustion method is performed. In this case, in Fig. 25, the axis of ordinate TQ indicates a required torque, and the axis of abscissa N indicates an engine speed. Further, in Fig. 25, X(N) shows a first boundary between the first operation area I and the second operation area II, and Y(N) shows a second boundary between the first operation area I and the second operation area II. A change of the operation area from the first operation area I to the second operation area II is judged on the basis of the first boundary X(N), and a change of the operation area from the second operation area II to the first operation area I is judged on the basis of the second boundary Y(N).

That is, when the required torque TQ is over the first boundary X(N) corresponding to a function of the engine speed N when the operation state of the engine is in the first operation area I and the low temperature combustion is performed, it is judged that the operation area is moved to the second operation area II, so that the combustion in accordance with the conventional combustion method is performed. Next, when the required torque TQ becomes lower than the second boundary Y(N) corresponding to a function of the engine speed N, it is judged that the operation area goes to the first operation area I, so that the low temperature combustion is again performed.

As mentioned above, two boundaries comprising the first boundary X(N) and the second boundary Y(N) close to the lower torque than the first boundary X(N) are provided for the following two reasons. First reason is that since the combustion temperature is relatively high in a side of the high torque in the second operation area II, the low temperature combustion can not be immediately performed even when the required torque TQ becomes lower than the first boundary X(N) at this time. That is, because the low temperature combustion is started only when the required torque TQ becomes significantly low, that is, lower than the second boundary Y(N). Second reason is that a hysteresis is provided with respect to the change of the operation area between the first operation area I and the second operation area II.

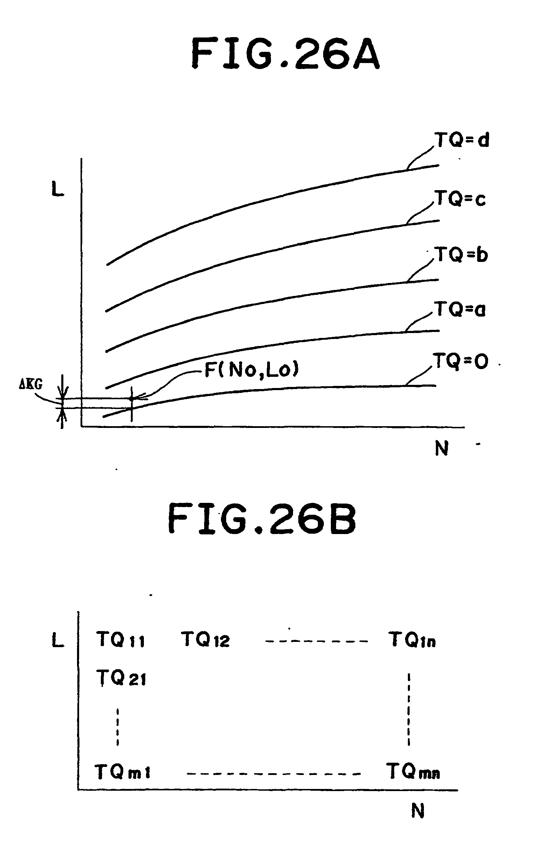

Fig. 26A shows a relation between the required torque TQ, the depression amount L of the acceleration pedal 50 and the engine speed N. In this case, in Fig. 26A, each of curves expresses a constant torque curve, a curve shown by TQ = 0 shows that the torque is 0, and the other curves show that the required torque is gradually increased in the order of TQ = a, TQ = b, TQ = c and TQ = d. The required torque TQ shown in Fig. 26A is previously stored within the ROM 42 as a function of the depression amount L of the acceleration peal 50 and the engine speed N in the form of a map as shown in Fig. 26B. In accordance with the present invention, the required torque TQ corresponding to the depression amount L of the acceleration pedal 50 and the engine speed N is at first calculated from the map shown in Fig. 26B, and the fuel injection amount Q and the like are calculated on the basis of the required torque TQ.

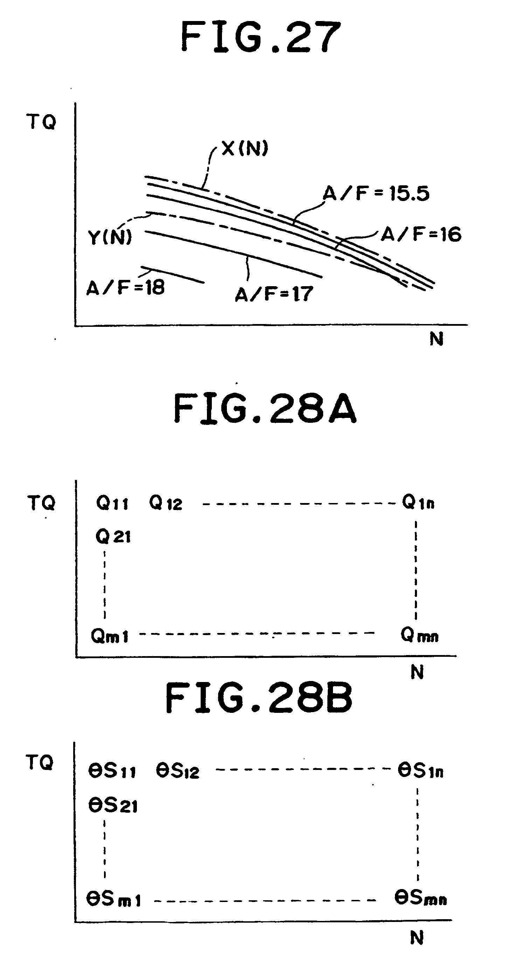

Fig. 27 shows an air fuel ratio A/F in the first operation area I. In Fig. 27, curves indicated by A/F = 15.5, A/F = 16, A/F = 17 and A/F = 18 respectively show states having air fuel ratios 15.5, 16, 17 and 18, each of the air fuel ratios between the curves is defined in accordance with a proportional allotment. As shown in Fig. 27, the air fuel ratio becomes lean in the first operation area I, and further, in the first operation area I, the air fuel ratio A/F is made lean in accordance that the required load L becomes low.

That is, the heat due to the combustion is reduced as the required torque TQ becomes low. Accordingly, the low temperature combustion can be performed even when lowering the EGR rate as the required torque TQ becomes low. When lowering the EGR rate, the air fuel ratio becomes large, so that as shown in Fig. 27, the air fuel ratio A/F is made large as the required torque TQ becomes low. As the air fuel ratio A/F is increased, the specific fuel consumption is improved, so that in order to make the air fuel ratio as lean as possible, in accordance with the embodiment of the present invention, the air fuel ratio A/F is made large as the required torque TQ becomes low.

Fig. 28A shows an injection amount Q in the first operation area I, and Fig. 28B shows an injection start timing θS in the first operation area I. As shown in Fig. 28A, the injection amount Q in the first operation area I is previously stored in the ROM 42 in the form of a map as a function of the required torque TQ and the engine speed N, and as shown in Fig. 28B, the injection start timing θS in the first operation area I is previously stored in the ROM 42 in the form of a map as a function of the required torque TQ and the engine speed N.

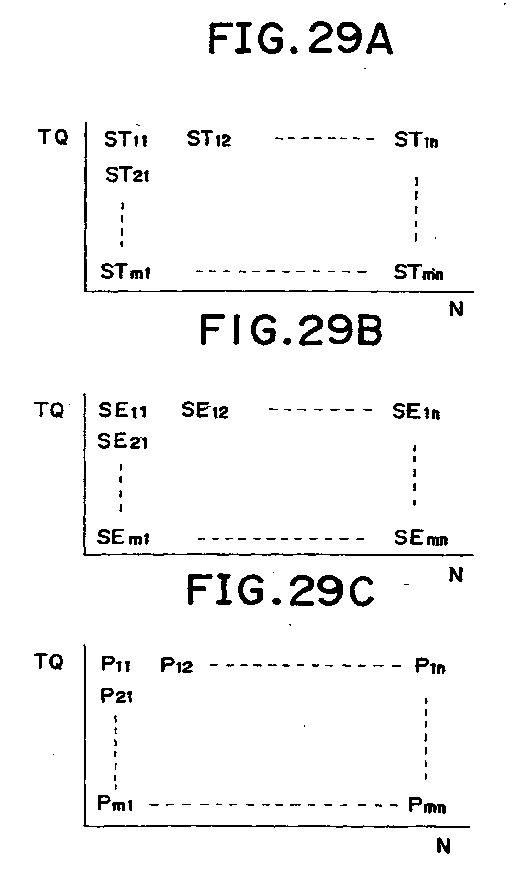

Furthermore, the target opening degree ST of the throttle valve 20 necessary for setting the air fuel ratio to the target air fuel ratio shown in Fig. 27 is previously stored in the ROM 42 in the form of a map as a function of the required torque TQ and the engine speed N as shown in Fig. 29A, and the target opening degree SE of the EGR control valve 31 necessary for setting the air fuel ratio to the target air fuel ratio shown in Fig. 27 is previously stored in the ROM 42 in the form of a map as a function of the required torque TQ and the engine speed N as shown in Fig. 29B.

Further, in the embodiment in accordance with the present invention, a fuel injection pressure in the first operation area I, that is, a target fuel pressure P within the common rail 34 is previously stored within the ROM 42 as a function of the required torque TQ and the engine speed N in the form of a map as shown in Fig. 29C.

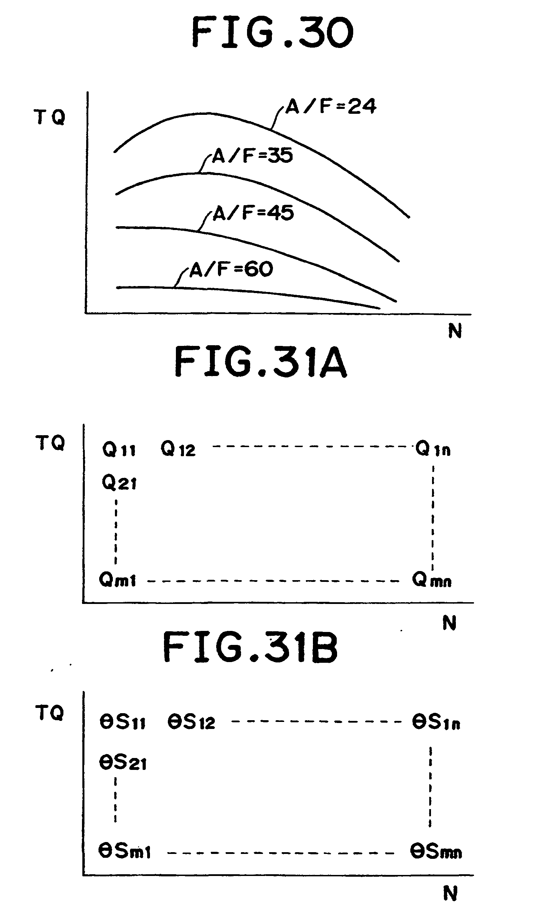

Fig. 30 shows a target air fuel ratio when the second combustion mode, that is, the combustion in accordance with the conventional combustion method is performed. In this case, in Fig. 14, curves indicated by A/F = 24, A/F = 35, A/F = 45 and A/F = 60 respectively show states having target air fuel ratios 24, 35, 45 and 60.

Fig. 31A shows an injection amount Q in the second operation area II, and Fig. 31B shows an injection start timing θS in the second operation area II. As shown in Fig. 31A, the injection amount Q in the second operation area II is previously stored in the ROM 42 in the form of a map as a function of the required torque TQ and the engine speed N, and as shown in Fig. 31B, the injection start timing θS in the second operation area II is previously stored in the ROM 42 in the form of a map as a function of the required torque TQ and the engine speed N.

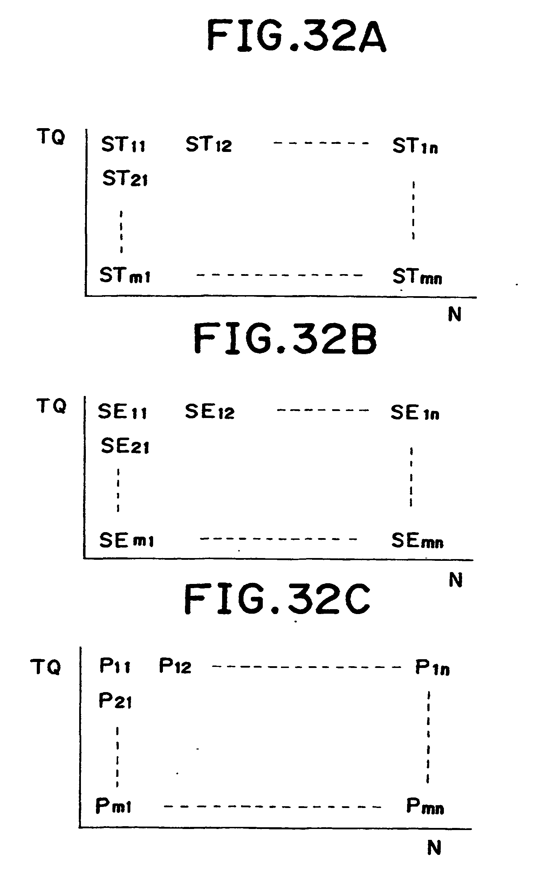

Further, the target opening degree ST of the throttle valve 20 necessary for setting the air fuel ratio to the target air fuel ratio shown in Fig. 30 is previously stored in the ROM 42 in the form of a map as a function of the required torque TQ and the engine speed N as shown in Fig. 32A, and the target opening degree SE of the EGR control valve 31 necessary for setting the air fuel ratio to the target air fuel ratio shown in Fig. 30 is previously stored in the ROM 42 in the form of a map as a function of the required torque TQ and the engine speed N as shown in Fig. 32B.

Further, in accordance with the embodiment, a fuel injection pressure in the second operation area II, that is, a target fuel pressure P within the common rail 34 is previously stored within the ROM 42 as a function of the required torque TQ and the engine speed N in the form of a map as shown in Fig. 32C.

In accordance with the present embodiment, in the first operation area I, the injection amount Q is calculated on the basis of the map shown in Fig. 28A, and in the second operation area II, the injection amount Q is calculated on the basis of the map shown in Fig. 31A. The maps shown in Figs. 28A and 31A are respectively the function of the required torque TQ and the engine speed N, so that the required torque is not changed at a time of switching even when the combustion is switched from the first combustion mode to the second combustion mode or from the second combustion mode to the first combustion mode in the first boundary X(N) or the second boundary Y(N). Accordingly, there is no risk that the torque change is generated at a time of switching.

In this case, the injection amount Q for the first combustion mode shown in Fig. 28A and the injection amount Q for the second combustion mode shown in Fig. 31A are calculated by an experiment. In this case, since the injection amount Q for the first combustion mode and the injection amount Q for the second combustion mode are respectively calculated in an independent manner by an experiment without considering the torque difference in each of the boundaries X(N) and Y(N), it is possible to form the maps shown in Figs. 28A and 31A in a significantly easy manner.

On the contrary, each of the required torque shown by the curves in Fig. 26A is experimentally determined so that an improved driving performance of a vehicle can be secured. Accordingly, there is a case that an actual engine output torque does not become 0 on the curve shown by TQ = 0 in Fig. 26A. Then, in accordance with the embodiment, the structure is made such that it is judged whether or not an operating state in which the engine load is substantially 0 is achieved, a value obtained by subtracting a shifting amount of the required torque TQ with respect to 0 from the required torque TQ calculated on the basis of the map shown in Fig. 26A is set to an actual required torque when the required torque TQ calculated on the basis of the map shown in Fig. 26A at a time of being judged to be in the operating state in which the engine load is substantially 0 is shifted to a positive side with respect to 0, and a value obtained by adding the shifting amount of the required torque TQ with respect to 0 to the required torque TQ calculated on the basis of the map shown in Fig. 26A is set to the actual required torque when the required torque TQ calculated on the basis of the map shown in Fig. 26A at a time of being judged to be in the operating state in which the engine load is substantially 0 is shifted to a negative side with respect to 0.

In particular, for example, if an operating state shown by F point in which the depression amount of the acceleration pedal is $L_0$ and the engine speed is $N_0$ is achieved when the actual engine output torque is 0 in Fig. 26A, the required torque TQ on the map shown in Fig. 26B does not become 0 at this time, and the required torque TQ on the map is shifted to a positive side at an amount of $\Delta KG$ with respect to 0. In this case, in the embodiment in accordance with the present invention, a value (TQ - $\Delta KG$) obtained by subtracting the shifted amount $\Delta KG$ of the required torque from the required torque TQ calculated on the basis of the map shown in Fig. 26B is set to an actual required torque. As a result, it is possible to obtain an engine output torque originally intended with respect to the depression amount L of each of the acceleration pedals 50 and each of the engine speeds N.

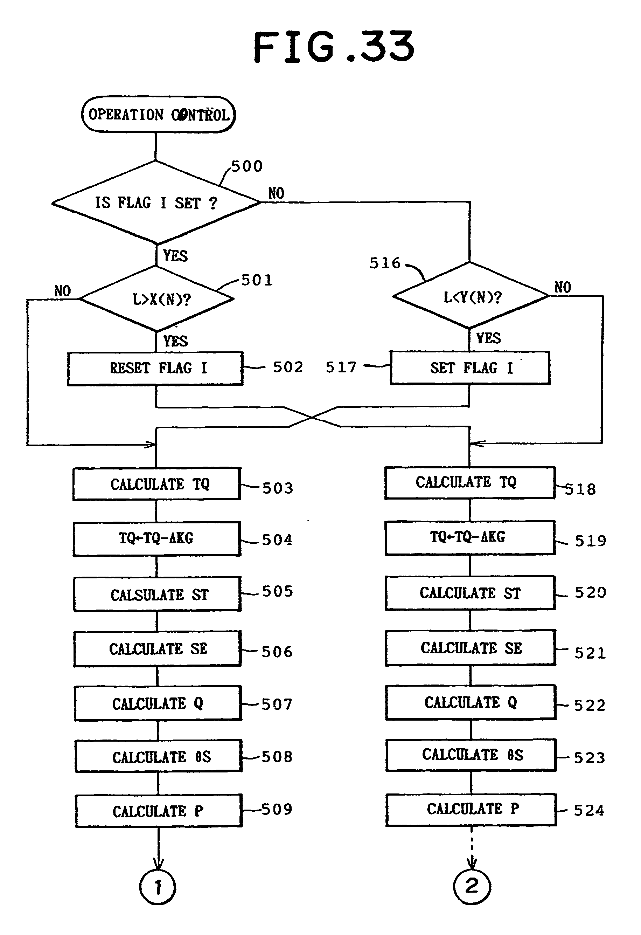

Next, an operation control will be described below with reference to Fig. 33.

With reference to Fig. 33, at first, in step 500, it is judged whether or not a flag I showing that the operation area of the engine is in the first operation area I. When the flag I is set, that is, the operation area of the engine is in the first operation area I, the process goes to step 501, so that it is judged whether or not the required load L becomes greater than the first boundary X1 (N). When a relation L ≤ X1 (N) is established, the process goes to step 503, and the low temperature combustion is performed.

That is, in step 503, the required torque TQ is calculated on the basis of the map shown in Fig. 26B. Next, in step 504, the value (= TQ - $\Delta KG$) obtained by subtracting the shifted amount $\Delta KG$ of the required torque from the required torque TQ calculated on the basis of the map is set to a final required torque TQ. Next, in steps 505 to 509, the opening degree ST of the throttle valve, the opening degree SE of the EGR control valve, the injection amount Q, the injection start timing θS and the fuel injection pressure P are calculated by using the final required torque.

That is, in step 505, the target opening degree ST of the throttle valve 20 is calculated on the basis of the map shown in Fig. 29A, and the opening degree of the throttle valve 20 is set to the target opening degree ST. Next, in step 506, the target opening degree SE of the EGR control valve 31 is calculated on the basis of the map shown in Fig. 29B, and the opening degree of the EGR control valve 31 is set to the target opening degree SE. Next, in step 507, the injection amount Q is calculated on the basis of the map shown in Fig. 28A. Next, in step 508, the injection start timing θS is calculated on the basis of the map shown in Fig. 28B. Next, in step 509, the target fuel pressure within the common rail 34, that is, the injection pressure P is calculated on the basis of the map shown in Fig. 29C.

Next, in step 510, it is judged on the basis of the output signal of the idle switch 55 whether or not the throttle valve 20 is at the idling opening degree. When the throttle valve 20 is in the idling opening degree, the process goes to step 511, and it is judged on the basis of the output pulse of the vehicle speed sensor 53 whether or not the vehicle speed is 0. When the vehicle speed is 0, the process goes to step 112, and it is judged on the basis of the output signal of the neutral switch 54 whether or not the automatic transmission 38 is at a neutral position. When the automatic transmission 38 is at the neutral position, the process goes to step 513 and it is judged whether or not a fixed time has elapsed after the automatic transmission 38 becomes at the neutral position, and when the fixed time has elapsed, it is judged that the operating state in which the engine load is substantially 0 is achieved.

When it is judged that the operation state in which the engine load is substantially 0 is achieved, the process goes to step 514 the required torque TQ is calculated on the basis of the map shown in Fig. 26B, and next in step 515, the required torque TQ is set to a shifted amount $\Delta KG$.

On the contrary, in step 501, when it is judged that the relation L > X(N) is established, the process goes to step 502 and the flag I is reset, and next, the process goes to step 518 and the second combustion mode is performed.

That is, in step 518, the required torque TQ is calculated on the basis of the map shown in Fig. 26B. Next, in step 519, the value (= TQ - $\Delta KG$) obtained by subtracting the shifted amount $\Delta KG$ of the required torque from the required torque TQ calculated on the basis of the map is set to a final required torque TQ. Next, in steps 520 to 524, the opening degree ST of the throttle valve, the opening degree SE of the EGR control valve, the injection amount Q, the injection start timing θS and the fuel injection pressure P are calculated by using the final required torque.

That is, in step 520, the target opening degree ST of the throttle valve 20 is calculated on the basis of the map shown in Fig. 32A, and the opening degree of the throttle valve 20 is set to the target opening degree ST. Next, in step 521, the target opening degree SE of the EGR control valve 31 is calculated on the basis of the map shown in Fig. 32B, and the opening degree of the EGR control valve 31 is set to the target opening degree SE. Next, in step 522, the injection amount Q is calculated on the basis of the map shown in Fig. 31A. Next, in step 523, the injection start timing θS is calculated on the basis of the map shown in Fig. 32B. Next, in step 524, the target fuel pressure within the common rail 34, that is, the injection pressure P is calculated on the basis of the map shown in Fig. 32C.

When the flag I is reset, the process goes to steps 500 to 516 in the next process cycle, and it is judged whether or not the required load L becomes lower than the second boundary Y(N). When the relation $L \geq Y(N)$ is established, the process goes to step 518, and the second combustion mode is performed under the lean air fuel ratio. On the contrary, in step 516, when it is judged that the relation $L < Y(N)$ is established, the process goes to step 517 and the flag I is set, and next, the process goes to step 503 and the low temperature combustion is performed.

The foregoing description of the preferred embodiments does not limit the claimed invention and the discussed combination of features might not be absolutely necessary for the inventive solution.

A first combustion mode in which an amount of an EGR gas within a combustion chamber (5) is more than the amount of the EGR gas when a generation amount of a soot becomes peak and the soot is hardly generated, that is, a low temperature combustion, and a second combustion mode in which the amount of the EGR gas within the combustion chamber (5) is less than the amount of the EGR gas when the generation amount of the soot becomes peak are selectively performed. Accordingly, a torque change amount of the engine output is detected by a detecting means (52, 40) when the first combustion mode is performed and a fuel injection timing is controlled so that the torque change amount becomes within a predetermined range.

A first combustion mode in which an amount of an EGR gas within a combustion chamber (5) is more than the amount of the EGR gas when a generation amount of a soot becomes peak and the soot is hardly generated, that is, a low temperature combustion, and a second combustion mode in which the amount of the EGR gas within the combustion chamber (5) is less than the amount of the EGR gas when the generation amount of the soot becomes peak are selectively performed. Accordingly, a torque change amount of the engine output is detected by a detecting means (52, 40) when the first combustion mode is performed and a fuel injection timing is controlled so that the torque change amount becomes within a predetermined range.

## Claims

1. An internal combustion engine structured such that a generation amount of a soot is gradually increased to a peak when an amount of an inert gas supplied within a combustion chamber is increased, said engine comprising:

   inert gas amount control means (40) for restricting a temperature of a fuel and an ambient gas at a time of combustion within the combustion chamber to a temperature lower than a temperature when soot is generated by making an amount of the inert gas supplied within the combustion chamber more than an amount of the inert gas when the generation amount of the soot becomes peak,
   **characterized by**
   detecting means (52, 40) for detecting a torque change amount of an engine output; and
   injection timing control means (40) for controlling a fuel injection timing so that the torque change amount becomes within a predetermined range.

2. An internal combustion engine according to claim 1, wherein the injection timing control means (40) controls the fuel injection timing in consideration of the detected torque change amount.

3. An internal combustion engine according to claim 1 or 2, wherein the injection timing control means (40) controls the fuel injection timing in dependence of the detected torque change amount such that the injection timing is quickened or delayed when the detected torque change amount is not within the predetermined range.

4. An internal combustion engine according to any of claims 1 to 3, wherein the injection timing control means (40) quickens the fuel injection timing when the torque change amount becomes greater than the predetermined range and delays the fuel injection timing when the torque change amount becomes smaller than the predetermined range.

5. An internal combustion engine according to any of claims 1 to 4, wherein the detecting means (52, 40) detects an average torque change amount of all cylinders, and the injection timing control means (40) controls the fuel injection timing of each of the cylinders so that the average torque change amount becomes within the predetermined range.

6. An internal combustion engine according to any of claims 1 to 4, wherein the detecting means (52, 40) detects the torque change amount at every cylinder, and the injection timing control means (40) controls the fuel injection timing at every cylinder so that the torque change amount of each of the cylinders becomes within the predetermined range.

7. An internal combustion engine according to any of claims 1 to 6, wherein a catalyst (25) having an oxidation function, preferably constituted by at least one of an oxidation catalyst, a three way catalyst or an NOx absorbent, is arranged within the exhaust passage of the engine.

8. An internal combustion engine according to any of claims 1 to 7, wherein there is provided an exhaust gas recirculating apparatus (29, 30, 31) for recirculating an exhaust gas discharged from the combustion chamber (5), preferably at an exhaust gas recirculation rate equal to or more than 55 %, into an engine intake passage (17), and said inert gas is constituted by the recirculated exhaust gas.

9. An internal combustion engine according to any of claims 1 to 8, wherein there is provided a switching means (40) for selectively switching between a first combustion mode and a second combustioin mode, wherein in the first combustion mode an amount of an inert gas within the combustion chamber (5) is more than an amount of an inert gas when a generating amount of a soot becomes peak and a soot is hardly generated, and wherein in the second combustion mode the amount of the inert gas within the combustion chamber (5) is less than the amount of the inert gas when the generating amount of a soot becomes peak.

10. An internal combustion engine according to claim 9, wherein the operation area of the engine is separated into a first operation area I close to a low load side and a second operation area II close to a high load side, wherein the first combustion mode is performed in the first operation area I and the second combustion mode is performed in the second operation area II.

**Patentansprüche**

1. Brennkraftmaschine, die so aufgebaut ist, dass eine Erzeugungsmenge an Ruß allmählich auf einen Höchstwert ansteigt, wenn die Menge eines innerhalb einer Brennkammer zugeführten Inertgases ansteigt, mit:

   einer Inertgasmengensteuerungseinrichtung (40) zur Beschränkung der Temperatur eines Kraftstoffs und eines Umgebungsgases zum Zeitpunkt einer Verbrennung innerhalb der Brennkammer auf eine Temperatur, die niedriger ist als eine Temperatur, wenn Ruß erzeugt wird, indem die Menge des innerhalb der Brennkammer zugeführten Inertgases auf mehr als die Menge des Inertgases eingestellt wird, wenn die Erzeugungsmenge des Rußes den Höchstwert einnimmt,
   **gekennzeichnet durch**
   eine Erfassungseinrichtung (52, 40) zum Erfassen eines Drehmomentänderungsbetrags der Maschinenleistung; und
   einer Einspritzzeitpunktsteuerungseinrichtung (40) zur Steuerung eines Kraftstoffeinspritzzeitpunkts, so dass der Drehmomentänderungsbetrag innerhalb eines vorbestimmten Bereichs liegt.

2. Brennkraftmaschine nach Anspruch 1, bei der die Einspritzzeitpunktsteuerungseinrichtung (40) den Kraftstoffeinspritzzeitpunkt unter Berücksichtigung des erfassten Drehmomentänderungsbetrags steuert.

3. Brennkraftmaschine nach Anspruch 1 oder 2, bei der die Einspritzzeitpunktsteuerungseinrichtung (40) den Kraftstoffeinspritzzeitpunkt in Abhängigkeit von dem erfassten Drehmomentänderungsbetrag derart steuert, dass der Einspritzzeitpunkt vorgezogen oder verzögert wird, wenn der erfasste Drehmomentänderungsbetrag nicht innerhalb des vorbestimmten Bereichs liegt.

4. Brennkraftmaschine nach einem der Ansprüche 1 bis 3, bei der die Einspritzzeitpunktsteuerungseinrichtung (40) den Kraftstoffeinspritzzeitpunkt vorzieht, wenn der Drehmomentänderungsbetrag größer als der vorbestimmte Bereich wird, und den Kraftstoffeinspritzzeitpunkt verzögert, wenn der Drehmomentänderungsbetrag kleiner als der vorbestimmte Bereich wird.

5. Brennkraftmaschine nach einem der Ansprüche 1 bis 4, bei der die Erfassungseinrichtung (52, 40) einen mittleren Drehmomentänderungsbetrag aller Zylinder erfasst und die Einspritzzeitpunktsteuerungseinrichtung (40) den Kraftstoffeinspritzzeitpunkt jedes Zylinders so steuert, dass der mittlere Drehmomentänderungsbetrag innerhalb des vorbestimmten Bereichs liegt.

**6.** Brennkraftmaschine nach einem der Ansprüche 1 bis 4, bei dem die Erfassungseinrichtung (52, 40) den Drehmomentänderungsbetrag an jedem Zylinder erfasst und die Einspritzzeitpunktsteuerungseinrichtung (40) den Kraftstoffeinspritzzeitpunkt an jedem Zylinder so steuert, dass der Drehmomentänderungsbetrag jedes Zylinders innerhalb des vorbestimmten Bereichs liegt.

**7.** Brennkraftmaschine nach einem der Ansprüche 1 bis 6, bei der innerhalb des Abgastrakts der Maschine ein Katalysator (25) mit Oxidationsfunktion angeordnet ist, der vorzugsweise durch einen Oxidationskatalysator, einen Dreiwegekatalysator und/oder einen NOx-Absorber gebildet wird.

**8.** Brennkraftmaschine nach einem der Ansprüche 1 bis 7, bei der eine Abgasrückführungsvorrichtung (29, 30, 31) vorgesehen ist, um ein von der Brennkammer (5) abgegebenes Abgas mit vorzugsweise einer Abgasrückführungsrate von mehr als 55 % in einen Maschineneinlasstrakt (17) rückzuführen, und das Inertgas von dem rückgeführten Abgas gebildet wird.

**9.** Brennkraftmaschine nach einem der Ansprüche 1 bis 8, bei der eine Umschalteinrichtung (40) zum gezielten Umschalten zwischen einem ersten Verbrennungsmodus und einem zweiten Verbrennungsmodus vorgesehen ist, wobei im ersten Verbrennungsmodus die Menge eines Intertgases innerhalb der Brennkammer (5) größer ist als die Menge eines Inertgases, wenn eine Erzeugungsmenge an Ruß einen Höchstwert einnimmt, und kaum Ruß erzeugt wird und wobei im zweiten Verbrennungsmodus die Menge des Intertgases innerhalb der Brennkammer (5) kleiner ist als die Menge des Intertgases, wenn die Erzeugungsmenge an Ruß den Höchstwert einnimmt.

**10.** Brennkraftmaschine nach Anspruch 9, bei der der Betriebsbereich der Maschine in einen ersten Betriebsbereich I nahe einer Seite geringer Last und einen zweiten Betriebsbereich II nahe einer Seite hoher Last aufgeteilt ist, wobei der erste Verbrennungsmodus im ersten Betriebsbereich I durchgeführt wird und der zweite Verbrennungsmodus im zweiten Betriebsbereich II durchgeführt wird.

**Revendications**

**1.** Moteur à combustion interne structuré d'une manière telle qu'une quantité de génération de suie augmente progressivement jusqu'à une crête lorsqu'une quantité de gaz inertes délivrée à l'intérieur d'une chambre de combustion est augmentée, ledit moteur comprenant:

un moyen de commande de quantité de gaz inertes (40) destiné à limiter une température d'un carburant et des gaz environnants au moment d'une combustion à l'intérieur de la chambre de combustion à une température inférieure à une température à laquelle la suie est générée en rendant une quantité de gaz inertes délivrée à l'intérieur de la chambre de combustion supérieure à une quantité de gaz inertes lorsque la quantité de génération de suie atteint une crête,
**caractérisé par**
un moyen de détection (52, 40) destiné à détecter une quantité de changement de couple d'une sortie de moteur ; et
un moyen de commande de calage d'injection (40) destiné à commander un calage d'injection de carburant de sorte que la quantité de changement de couple se trouve à l'intérieur d'une plage prédéterminée.

**2.** Moteur à combustion interne selon la revendication 1, dans lequel le moyen de commande de calage d'injection (40) commande le calage d'injection du carburant en prenant en considération la quantité de changement de couple détectée.

**3.** Moteur à combustion interne selon la revendication 1 ou 2, dans lequel le moyen de commande de calage d'injection (40) commande le calage d'injection de carburant en fonction de la quantité de changement de couple détectée d'une manière telle que le calage d'injection est avancé ou retardé lorsque la quantité de changement de couple détectée ne se trouve pas à l'intérieur de la plage prédéterminée.

**4.** Moteur à combustion interne selon l'une quelconque des revendications 1 à 3, dans lequel le moyen de commande de calage d'injection (40) avance le calage d'injection de carburant lorsque la quantité de changement de couple devient supérieure à la plage prédéterminée et retarde le calage d'injection de carburant lorsque la quantité de changement de couple devient inférieure à la plage prédéterminée.

5. Moteur à combustion interne selon l'une quelconque des revendications 1 à 4, dans lequel le moyen de détection (52, 40) détecte une quantité de changement de couple de tous les cylindres, et le moyen de commande de calage d'injection (40) commande le calage d'injection de carburant de chacun des cylindres de sorte que la quantité de changement de couple moyenne se trouve à l'intérieur de la plage prédéterminée.

6. Moteur à combustion interne selon l'une quelconque des revendications 1 à 4, dans lequel le moyen de détection (52, 40) détecte la quantité de changement de couple au niveau de chaque cylindre, et le moyen de commande de calage d'injection (40) commande le calage d'injection du carburant au niveau de chaque cylindre de sorte que la quantité de changement de couple de chacun des cylindres se trouve à l'intérieur de la plage prédéterminée.

7. Moteur à combustion interne selon l'une quelconque des revendications 1 à 6, dans lequel un catalyseur (25) possédant une fonction d'oxydation, constitué de préférence par au moins l'un parmi un catalyseur d'oxydation, un catalyseur à trois voies ou un absorbant de NOx, est disposé à l'intérieur du passage d'échappement du moteur.

8. Moteur à combustion interne selon l'une quelconque des revendications 1 à 7, dans lequel il est prévu un appareil de recirculation des gaz d'échappement (29, 30, 31) destiné à faire recirculer les gaz d'échappement évacués de la chambre de combustion (5), de préférence à un taux de recirculation des gaz d'échappement égal ou supérieur à 55 %, dans un passage d'admission du moteur (17), et lesdits gaz inertes sont constitués par les gaz d'échappement mis à recirculer.

9. Moteur à combustion interne selon l'une quelconque des revendications 1 à 8, dans lequel il est prévu un moyen de commutation (40) destiné à commuter sélectivement entre un premier mode de combustion et un deuxième mode de combustion, dans lequel dans le premier mode de combustion une quantité de gaz inertes à l'intérieur de la chambre de combustion (5) est supérieure à une quantité de gaz inertes lorsqu'une quantité de génération de suie atteint une crête et lorsque la suie est difficilement générée, et dans lequel dans le deuxième mode de combustion, la quantité de gaz inertes à l'intérieur de la chambre de combustion (5) est inférieure à la quantité de gaz inertes lorsque la quantité de génération de suie atteint une crête.

10. Moteur à combustion interne selon la revendication 9, dans lequel la zone de fonctionnement du moteur est séparée en une première zone de fonctionnement I proche d'un côté faible charge et une deuxième zone de fonctionnement II proche d'un côté à charge élevée, dans lequel le premier mode de combustion est exécuté dans la première zone de fonctionnement I et la deuxième mode de combustion est exécuté dans la deuxième zone de fonctionnement II.

# FIG.1

# FIG. 2

THROTTLE OPENING DEGREE

0

70
60
EGR RATE 50
40

TORQUE

SMOKE

0

HC

0

CO

0

NOx

0

15  20  25  30 35 40   A／F

FIG. 3A

FIG. 3B

# FIG. 4

# FIG. 5

# FIG. 6

# FIG. 7

# FIG. 8

# FIG. 9

I             II

FULL OPEN

THROTTLE VALVE
OPENING DEGREE

FULL CLOSE

FULL OPEN

EGR CONTROL VALVE
OPENING DEGREE

FULL CLOSE

80%

EGR RATE 40%

0

(LEAN)

AIR FUEL RATIO ↑

STOICHIOMETRIC
AIR FUEL RATIO

BTDC40°

θS

INJECTION TIMING TDC

θE

ATDC40°

INJECTION AMOUNT

0

L

# FIG.10

# FIG.11A

# FIG.11B

# FIG.12A

# FIG.12B

# FIG.13

# FIG.14A

# FIG.14B

# FIG.15A

$Q_{11}$      $Q_{12}$     ------     $Q_{1n}$

$Q_{21}$

$Q_{m1}$      -----------      $Q_{mn}$

L, N

# FIG.15B

$\theta S_{11}$     $\theta S_{12}$     ------     $\theta S_{1n}$

$\theta S_{21}$

$\theta S_{m1}$     -----------     $\theta S_{mn}$

L, N

# FIG.16

# FIG.17

CALCULATE TORQUE
CHANGE AMOUNT

100

IS ATDC 30 DEGREES OF
CYLINDER OF NUMBER i ?   — NO

YES

101

$Ta(i) \leftarrow TIME-TIMEO$

102

IS ATDC 90 DEGREES OF
CYLINDER OF NUMBER i ?   — NO

YES

103

$Tb(i) \leftarrow TIME-TIMEO$

104

$$DN(i) \leftarrow \left(\frac{30°}{Tb(i)}\right)^2 - \left(\frac{30°}{Ta(i)}\right)^2$$

105

$DLN(i) \leftarrow DN(i)j-DN(i)$

106

$C \leftarrow C+1$

107

$C=4?$   — NO

YES

108

$$SM \leftarrow \frac{DLN(i)+DLN(2)+DLN(3)+DLN(4)}{4}$$

109

$C \leftarrow 0$

END

# FIG.18

# FIG.19

```
         ┌─────────────────────────┐
         │  CLACULATE TORQUE       │
         │  CHANGE AMOUNT          │
         └─────────────────────────┘
                     │           ╱300
                 ◇─────────────◇  NO
                 IS ATDC 30° OF CYLINDER ───────┐
                 OF NUMBER i ?                   │
                 ◇─────────────◇                 │
                     │ YES        ╱301           │
         ┌─────────────────────────┐             │
         │   Ta(i)←TIME-TIME0      │             │
         └─────────────────────────┘             │
                     │          ╱302             │
                 ◇─────────────◇  NO             │
                 IS ATDC 90° OF CYLINDER ────────┼──┐
                 OF NUMBER i ?                    │  │
                 ◇─────────────◇                  │  │
                     │ YES        ╱303            │  │
         ┌─────────────────────────┐             │  │
         │   Tb(i)←TIME-TIME0      │             │  │
         └─────────────────────────┘             │  │
                     │                           │  │
         ┌─────────────────────────┐ ╱304        │  │
         │              ...         │             │  │
         └─────────────────────────┘             │  │
                     │          ╱305              │  │
         ┌─────────────────────────┐             │  │
         │  DLN(i)←DN(i)j-DN(i)    │             │  │
         └─────────────────────────┘  306        │  │
                     │                           │  │
         ┌─────────────────────────┐             │  │
         │  SM(i)← ...             │             │  │
         └─────────────────────────┘             │  │
                     │←──────────────────────────┼──┘
                 ┌───────┐                        
                 │  END  │                        
                 └───────┘                        
```

$$DN(i) \leftarrow \left(\frac{30°}{Tb(i)}\right)^2 - \left(\frac{30°}{Ta(i)}\right)^2$$

$$DLN(i) \leftarrow DN(i)j - DN(i)$$

$$SM(i) \leftarrow \frac{DLN(i) + DLN(i)j + DLN(i)j_{-1} + DLN(i)j_{-2}}{4}$$

EP 0 982 485 B1

# FIG.20

```
        ( OPERATION CONTROL )
                 │
                 ▼            ┌─400
            ◇ IS FLAG I SET ? ◇──── NO ────┐
                 │ YES                      │
                 ▼         ┌─401            ▼          ┌─412
   NO ──── ◇ L>X(N)? ◇              ◇ L<Y(N)? ◇ ──── NO ──┐
                 │ YES                      │ YES          │
                 ▼      ┌─402               ▼    413       │
         │ RESET FLAG I │           │ SET FLAG I │         │
                 │                          │              │
                 └──────────┐   ┌───────────┘              │
                            ╳                              │
                 ┌──────────┘   └───────────┐              │
                 ▼                          ▼              │
         ┌─────────────┐ 403        ┌─────────────┐ 414    │
         │ CALCULATE ST │           │ CALCULATE ST │       │
         ├─────────────┤ 404        ├─────────────┤ 415    │
         │ CALCULATE SE │           │ CALCULATE SE │       │
         ├─────────────┤ 405        ├─────────────┤ 416    │
         │ CALCULATE Q  │           │ CALCULATE Q  │       │
         ├─────────────┤ 406        ├─────────────┤ 417    │
         │ CALCULATE θS(i) │        │ CALCULATE θS │       │
         └─────────────┘               │                   │
   407                                 │                   │
     ◇ SM(i)>MAX? ◇──── YES ──┐  408   │                   │
         │ NO                 ▼        │                   │
   409             │ ΔθS(i)←ΔθS(i)+α │ │                   │
     ◇ SM(i)<MIN? ◇──── YES ──┐  410   │                   │
         │ NO                 ▼        │                   │
                   │ ΔθS(i)←ΔθS(i)-α │ │                   │
                 ┌─┘                   │                   │
                 ▼                     │                   │
     │ θS(i)←θS(i)+ΔθS(i) │ ─411       │                   │
                 │◄────────────────────┘                   │
                 ▼◄─────────────────────────────────────────┘
             (  END  )
```

# FIG.21A

# FIG.21B

# FIG.22A

$$Q1_{11} \quad Q1_{12} \quad ----- \quad Q1_{1n}$$

$$Q1_{21}$$

$$Q1_{m1} \quad ------------ \quad Q1_{mn}$$

L

N

# FIG.22B

$$Q2_{11} \quad Q2_{12} \quad ----- \quad Q2_{1n}$$

$$Q2_{21}$$

$$Q2_{m1} \quad ------------ \quad Q2_{mn}$$

L

N

# FIG.23A

# FIG.23B

# FIG.24

# FIG.25

# FIG.26A

# FIG.26B

# FIG.27

TQ

X(N)

A/F=15.5

A/F=16

Y(N)

A/F=18    A/F=17

N

# FIG.28A

TQ

$Q_{11}$  $Q_{12}$ —————————— $Q_{1n}$

$Q_{21}$

$Q_{m1}$ ——————————— $Q_{mn}$

N

# FIG.28B

TQ

$\theta S_{11}$  $\theta S_{12}$ —————————— $\theta S_{1n}$

$\theta S_{21}$

$\theta S_{m1}$ ——————————— $\theta S_{mn}$

N

# FIG.29A

TQ | $ST_{11}$  $ST_{12}$  – – – – – – –  $ST_{1n}$
$ST_{21}$
$ST_{m1}$  – – – – – – – – – – –  $ST_{mn}$

N

# FIG.29B

TQ | $SE_{11}$  $SE_{12}$  – – – – – –  $SE_{1n}$
$SE_{21}$
$SE_{m1}$  – – – – – – – – – –  $SE_{mn}$

N

# FIG.29C

TQ | $P_{11}$  $P_{12}$ – – – – – – – – – – –  $P_{1n}$
$P_{21}$
$P_{m1}$ – – – – – – – – – – – – – –  $P_{mn}$

N

# FIG.30

# FIG.31A

# FIG.31B

# FIG.32A

TQ

ST$_{11}$    ST$_{12}$    -------    ST$_{1n}$

ST$_{21}$

ST$_{m1}$    -----------    ST$_{mn}$

N

# FIG.32B

TQ

SE$_{11}$    SE$_{12}$    -------    SE$_{1n}$

SE$_{21}$

SE$_{m1}$    -----------    SE$_{mn}$

N

# FIG.32C

TQ

P$_{11}$    P$_{12}$    --------------    P$_{1n}$

P$_{21}$

P$_{m1}$    --------------    P$_{mn}$

N

# FIG.33

# FIG.34

```
                    ( 1 )
                      │
                      │        510
                  ╱───────────╲           NO
                 ╱  IS IDLING  ╲──────────────────┐
                 ╲ OPENING     ╱                   │
                  ╲  DEGREE ?  ╱                    │
                   ╲─────────╱                      │
                      │ YES                         │
                      │           511               │
                  ╱───────────╲           NO        │
                 ╱ IS VEHICEL  ╲──────────────→     │
                 ╲ SPEED = 0 ? ╱                     │
                  ╲───────────╱                      │
                      │ YES                          │
                      │           512                │
                  ╱───────────╲           NO         │
                 ╱ IS NEUTRAL  ╲──────────────→      │
                 ╲ SWITCH      ╱                      │
                  ╲ TURNED ON ?╱                      │
                   ╲─────────╱                        │
                      │ YES                           │
                      │           513                 │
                  ╱───────────╲           NO          │
                 ╱ HAS FIXED   ╲──────────────→       │
                 ╲ TIME        ╱                       │
                  ╲ ELAPSED ?  ╱                       │
                   ╲─────────╱                         │
                      │ YES                            │
              ┌───────────────┐                        │
              │    READ TQ     │─515 514                │
              └───────────────┘                        │
                      │                                │
              ┌───────────────┐                        │
              │    ΔKG←TQ      │─515                    │
              └───────────────┘                        │
                      │                                ▼
                      ├──────────────────────────( 2 )
                      │
                ╭───────────╮
                │    END     │
                ╰───────────╯
```